# EUROPEAN PATENT SPECIFICATION

(11) **EP 4 478 984 B1**
(45) Date of publication and mention of the grant of the patent: **15.07.2026**
(21) Application number: 23714677.4
(22) Date of filing: 23.03.2023
(51) Int. Cl.: A61C 19/06, A61C 5/62

(54) **DISPENSER**
SPENDER
DISTRIBUTEUR

(30) Priority: 24.03.2022 EP 22164210; 08.04.2022 EP 22167336; 10.05.2022 WO PCT/EP2022/062697; 16.09.2022 WO PCT/EP2022/075775; 22.02.2023 GB 202302493
(43) Date of publication of application: 25.12.2024
(73) Proprietor: medmix Switzerland AG, 9469 Haag (Rheintal) (CH)
(72) Inventor: MUELLER, Franck, 6800 Feldkirch (AT); NAGARAJA, Dilip Kumar, 562106 Bengaluru, Karnataka (IN)
(74) Representative: Manitz Finsterwald Patent- und Rechtsanwaltspartnerschaft mbB
(86) International application number: PCT/EP2023/057521
(87) International publication number: WO 2023/180467

(56) References cited:
- US-A1- 2007 012 376
- US-A1- 2017 151 392
- US-A1- 2020 188 075

## Description

The present invention relates to a multi-use dispenser for dispensing a material, in particular 1K materials, such as 1K dental materials. The dispenser comprises a main body forming a part of a housing extending in a longitudinal direction defining a longitudinal axis, and a dispense mechanism provided at least partly within the main body, wherein the dispense mechanism comprises a piston rod axially movable in direction of the longitudinal axis with respect to the main body, wherein the main body comprises at its proximal end connection means configured to couple an applicator or hub to the multi-use dispenser in a releasable manner such that a movement of the piston rod towards the proximal end of the main body results in a dispense operation, in particular of dispensing the material out of a reservoir storing the material, via the applicator or hub.

A dispenser comprising the features of the preamble of claim 1 is known from US 2020/0188075 A1. A further prior art dispenser is disclosed for example in US 2017/0151392 A1.

Applicators which are also referred to as hub are well known, particularly in the dental and medical field for treating e.g. a patient's gums, a patient's teeth, spaces between the teeth or the like. The applicators can be used to apply 1K materials comprising for example fluids, such as cremes, medicinal fluids, etching materials, adhesives, ointments and the like to parts of a patient's mouth or other parts of the body.

For carrying out the various tasks, the applicators generally have an application tip that is configured to carry out the precise application. For example, brushes are known for cleaning between a patient's teeth, also foams are also known for applying a dental or medical fluid at an area of the mouth including the teeth. Moreover, cannulas are known for applying 1K material at teeth. Particularly with regard to hard to reach areas of the mouth it is desirable to provide an applicator that can be deformed for the specific application and that reliably maintains its shape after deformation.

In order to apply the 1K material to a patient's mouth via the applicator, the 1K material has to be made available at the applicator. Dispensers are known for this purpose. Typically dispensers are formed as disposable devices that are discarded once the material stored therein has been dispensed. Moreover, it is not recognisable how much material is still present in these dispensers. It is also the case that the dispensers are not typically designed for single handed use which makes the task of the dental professional or medical professional using the dispenser more arduous.

It is therefore an object of the invention to make available a re-usable or multi-use dispenser in which waste and in particular plastic waste can be significantly reduced and which is preferably capable of providing pre-determined doses of a 1K material. It is a further object of the invention to provide a dispenser that is simple to use and preferably simple to clean and disinfect that optionally provides feedback to a user thereof of the state of use of the dispenser. It is yet another object of the invention to provide a multi-use dispenser allowing a reliable and exact dispense of substance from an applicator or hub.

This object is satisfied by a dispenser in accordance with claim 1 and an application set in accordance with claim 13.

The multi-use dispenser according to the invention comprises a main body forming a part of a housing extending in a longitudinal direction defining a longitudinal axis, and a dispense mechanism provided at least partly within the main body, wherein the dispense mechanism comprises a piston rod axially movable in direction of the longitudinal axis with respect to the main body, wherein the main body comprises at its proximal end connection means configured to couple an applicator or hub to the multi-use dispenser in a releasable manner such that a movement of the piston rod towards the proximal end of the main body results in a dispense operation, in particular of dispensing the material out of a reservoir storing the material, via the applicator or hub, wherein the dispense mechanism comprises a dispense activator configured to move the piston rod a specific predefined distance towards the proximal end of the main body upon activation of the dispense activator.

According to a further aspect of the present invention, a multi-use dispenser for use with an applicator, in particular for dental applications, comprises a main body forming a housing and a dispense mechanism provided at least partly within the main body. The dispense mechanism comprises a piston rod, in particular with a piston pusher, axially movable with respect to the main body in a proximal direction for a dispense operation. The main body comprises, in particular keyed, connection means, in particular in the form of Luer-Lock or bayonet connection means, configured to couple an applicator or hub to the multi-use dispenser in a releasable manner such that a proximal movement of the piston rod results in a dispense operation of the applicator or hub. The dispense mechanism comprises a dispense activator, in particular comprising a dispense knob, configured to be operated by a user and to move the piston rod a specific predefined distance in the proximal direction upon operation.

Furthermore, such a dispenser, e.g. a dental dispenser, for dispensing 1K materials, in particular 1K dental materials, may comprise a housing, one or more nozzles for dispensing one or more respective 1K materials, the one or more nozzles being attached to the housing, one or more reservoirs for storing the respective 1K material, the one or more reservoirs being arranged within the housing of the dispenser, and one or more material driving assemblies configured to act on a respective one of the one or more reservoirs to drive the respective 1K Material through a respective one of the one or more nozzles, with the one or more material driving assemblies at least partly being arranged within the housing. In this context, it is to be noted that the nozzle may be a part of the applicator or hub.

In this way an easy to handle and dosable dispenser is made available. The dispenser is preferably also self-explanatory to a user thereof and capable of enabling one handed use for efficiency of dispensing of materials.

It should be noted that proximal refers to that part of the dispenser that in use thereof is closer to the patient and distal refers to that part of the dispenser that in use thereof is further away from the patient.

The term multi-use dispenser in the sense of the present invention refers not to a dispenser configured to multiply dispense substance from one single applicator but to a dispenser configured to dispense substances from multiple applicators releasably coupled to the dispenser. Nevertheless, the present understanding of the term multi-use dispenser also includes configurations in which multiple doses of substances can be dispensed with the dispenser from each of the multiple applicators.

With the dispense activator of the present configuration resulting in the predefined movement of the piston rod upon each operation, a predefined amount of substance from the applicator is dispensed per operation of the dispense activator reliably and exactly. The predefined distance moved by the piston rod can in particular take into account any relaxation effects. Thus, the user can dispense reliably and exactly a specific amount of the substance from the applicators or if de-sired a multiple of this specific amount by a multiple operation of the dispense activator from a single applicator.

In this connection it should be noted that the dispenser can be configured for use with a plethora of substances. Such materials can range from adhesives, filler materials, cleaning materials, lubricants, fluids, liquids, such as pharmaceutical liquids, whiteners, and ointments, used in the dental, medical, pharmaceutical and veterinary fields, to adhesives, lubricants and paints used in industrial applications, e.g. in the automotive, and aeronautical fields, and in the construction sector etc.

The applicator may be also referred to as hub. For convenience, the term applicator is preferably used hereinafter. Furthermore, the dispense mechanism and the material driving assembly are both used to discharge material and may be used synonymously hereinafter. Also the terms plunger and piston may be used synonymously hereinafter.

Preferably, the dispense mechanism comprises a resetting spring biasing the dispense activator from its operated position into its non-operated position.

Such a configuration results in a further improved handling of the multi-use dispenser and, in particular, enables an easy multi dispense operation with a single applicator.

Preferably, the dispense mechanism comprises a rear body axially movable together with the piston rod along the main body and configured to support the piston rod in its orientation with respect to the main body.

Such a configuration is very robust and, thus, also reliable.

The one or more nozzles may comprise at least one of a cannula, a brush, micro brush etc., an outlet for e.g. dispensing predefined volumes of 1K material, e.g. in the form of drops, and combinations of the foregoing. In this way the 1K material can be applied and/or dispensed in a simple manner.

The nozzle may be one of a nozzle repeatedly detachable to and from the dispenser, e.g. via first and second connections means and a nozzle fixed to the dispenser. By providing replaceable nozzles, different nozzles can be attached as applicators to enable different use cases, e.g. for the treatment of bigger and smaller cavities. In other words, the applicator may be repeatedly detachable to and from the dispenser. However, the applicator may also be fixed to the dispenser.

Selecting e.g. a thread or a Luer lock as the first and second connection means enables a fast, simple and efficient means of replacing the nozzle or the applicator.

The one or more material driving assemblies may comprise one or more members selected from the group of members comprising a plunger or piston, a driver, e.g. a mechanical drive, an electric drive, a pressurized gas drive, one or more pumps, one or more valves, one or more piezo elements and combinations of the foregoing. Such components enable the precise dosing of materials to be dispensed.

The dispenser may further comprise a sensor assembly for sensing an applicator in the proximity of one of the one or more nozzles or applicators; and/or for sensing one or more parameters of the dispenser and/or of the environment of use of the dispenser. Using such sensor assemblies e.g. to initiate the dispensing of materials enables a fast, simple and efficient way of using the dispenser. Such sensor assemblies may comprise RFID technology, magnetic sensor assemblies, bar codes, QR codes, light barriers or the like. In this connection the sensors may be pressure sensors, temperature sensors, position sensors and/or proximity sensors or the like.

If a dispenser with several nozzles is provided that supply several kinds of 1K material, the nozzle of a specific kind of 1K material can be activated if a user brings a specific kind of patient applicator, e.g. having a specific RFID code, magnetic coding etc. into the proximity of the nozzle without having to press any buttons for ease of use of the dispenser. In this context it is noted that the patient applicator may not be confused with the dispenser's applicator. By means of example, the patient applicator may refer to a spatula used to apply a material to the patient, the material being discharged from the dispenser via said nozzle or applicator.

The sensor assembly may comprise a position resolving sensor and/or several individual sensors, with areas of the position resolving sensor and/or the individual sensors of the sensor assembly then optionally being associated with a respective one of the one or more nozzles. If a dispenser with several nozzles is provided that supply several kinds of 1K material, the nozzle of a specific kind of 1K material can be activated if a user brings a patient applicator into the proximity of the nozzle or dispenser's applicator without having to press any buttons for ease of use of the dispenser.

The dispenser may further comprise a control unit arranged within the housing, the control unit being configured to initiate an activation of the one or more material driving assemblies to act on one of the one or more reservoirs to dispense the respective 1K material via said one of the one or more nozzles. In this way the digital information obtained by the sensor assembly can be processed in a fast and efficient way to dispense the desired 1K material.

The control unit may further be configured to sense the presence of a patient applicator in the region of one of the one or more nozzles, i.e. the control unit may be able to sense the actuation of e.g. an actuator associated with the dispenser or the presence of a patient applicator in the proximity of the dispenser. In this way an easy to handle and dosable dispenser is made available. The dispenser is preferably also self-explanatory to a user thereof and capable of enabling one handed use for efficiency of dispensing of materials.

In this connection it should be noted that the control unit may be configured to process signals detected by sensors associated with the dispenser. Such sensors may comprise pressure sensors, temperature sensors, position sensors and/or the sensor assembly.

The control unit can process the information conveyed by the signal and obtained by these sensors to alert a user of the dispenser e.g. that a dispensing speed needs adjusting, that a 1K material stored in a respective reservoir is running low, that a temperature of the respective 1K material is too high or too low, that a component of the material driving assemblies is at a wrong position, that a patient applicator is in the proximity of the dispenser etc.

The control unit may further be configured to sense the presence of a patient applicator in the region of one of the one or more nozzles on the basis of signals transmitted from the sensor assembly to the control unit. In this way no specific code has to be present at the patient applicator and the dispenser merely detects an object in the proximity of a nozzle and recognizes this object as the desired patient applicator for ease of use.

A dosing of the 1K material may be made available by sensing the time the patient applicator is present at the dispenser and dispensing material for this period of time.

The dispenser may further comprise an activator, such as a button or lever, the activator then optionally being associated with a respective one of the one or more nozzles or applicators for activating one of the one or more material driving assemblies to dispense 1K material via said one of the one or more nozzles or applicators. By providing e.g. a button at a pen-type dispenser the user can simply press the button and thereby to initiate the supply of the 1K material to the nozzle or the applicator for applying the desired 1K material.

According to the invention, the dispense activator (activator) is configured to be operated in a direction perpendicular to the axial dispense direction of the piston rod.

Such a configuration results in an improved handling of the multi-use dispenser and further allows the implementation of highly compact configurations.

Also, according to the invention, the dispense activator is coupled operatively to the piston rod via an activation spring member fixed to the dispense activator and in engagement with the piston rod.

Such a configuration is structurally quite simple and, thus, cost efficient but still reliable.

Preferably, the dispense activator comprises a brake element contacting the piston rod in a non-operated position of the dispense activator to lock an axial movement of the piston rod.

Such a configuration reduces the risk of an undesired axial movement of the piston rod with the dispense activator not being operated.

The reservoir may be arranged in a chamber of the dispenser, optionally wherein the chamber may be arranged within a cover of the dispenser, optionally wherein the dispenser may further comprise a passage connecting the respective one of the one or more nozzles or applicators with a respective chamber.

In this way a simple to manufacture construction of a dispenser is made available in which a contact of the 1K material stored within the reservoir to other components of the dispenser are minimized.

The dispenser may be a pen-type dispenser, and preferably is a reusable pen-type dispenser. Such dispensers are simple to use and preferably with one hand.

In this connection it should be noted that such pen-type dispensers can be provided as an accessory to a dentist chair, with the supply of energy, pressurized air etc. then being provided via a respective interface between the pen-type dispenser and the dentist's chair.

In this connection it should be noted that the pen-type dispenser may be equipped with a window for monitoring the state of use of a container installed therein. In this connection it should be noted that also different kinds of level indicators could be made available to indicate the state of use of a container installed in the dispenser.

It should further be noted that through the appropriate selection of the material driving assemblies, e.g. using an electric motor a stepwise application of the 1K material can be made available, e.g. a dosing function can be made available.

In this connection it should be noted that such a dosing function may also be made available by a valve arranged at the dispenser, with the valve permitting a certain amount of material to pass within a pre-defined unit of time.

Moreover, such a pen-type dispenser enables one handed use during application so that a dental professional or the like can hold a mirror or a further dispenser in their other hand while using the dispenser.

It should further be noted that such a dispenser is simple to clean and disinfect e.g. it can be autoclavable in apparatus already present in a dental or medical practice.

Such a pen-type dispenser can be used with a variety of applicators connectable thereto for different uses, with only the applicator and the cartridge then having to be replaced between used of the dispenser rather than the complete dispenser as is the case in the prior art.

In this connection it should also be noted that at least one of the reservoir, a cartridge, the dispenser, the applicator, the nozzle and combinations of the foregoing may be provided with coding means. Such coding means ensure that the correct type of material is used with the correct type of dispenser and the correct type of applicator.

In this connection it should be noted that the pen-type dispenser and the associated containers may be color coded or coded in another way in order to ensure that the correct containers are inserted into the correct pen-type dispenser. By way of example, the following colors can be used for the color coding, yellow, green, blue, teal, purple, pink, red and brown. By way of example, a yellow color code is used for etching agents, a green color code is used for adhesives, a blue color code is used for topical medications, a teal color code is used for a whitening agent, a green color code is used for flurinizing agents, a purple color code is used for cremes, a pink color code is used for medicinal fluids, a brown color code is used for ointments etc.

In this connection it should be noted that the replaceable nozzles or applicators may also be color coded for the different types of applications, e.g. a micro brush may be coded with the color blue for application of topical medications, a green color code may be provided for use with foams for applying fluorine comprising agents etc.

The dispenser may be a dispensing station, such as a dispensing station configured to be installed at a dental unit, i.e. a dentist's chair. In this connection the dispenser may comprise a plurality of nozzles or applicators for different materials. By way of example the dispenser may comprise between one, two, three, four and eight different nozzles or applicators for different kinds of 1K materials, with respective reservoirs and material driving assemblies likewise being provided.

In this connection it should be noted that the color coding mentioned in the foregoing may be used also for the dispensing stations. It should also be noted that the applicator associated with a respective nozzle and 1K material may also be color coded so that the dental or medical professional knows that e.g. a micro-brush applicator intended to apply topical medications may be color coded in blue and the nozzle of the dispenser is then likewise color coded in blue etc.

In use, the dispenser is simple to use as a dental or medical professional simply has to hold the patient applicator beneath a nozzle of the dispenser in order to retrieve a 1K material.

In this way also a contact of the patient applicator with the dispenser is avoided, such that the dispenser can be cleaned in a fast and efficient manner, e.g. by simply using a disinfectant wipe between uses negating the use of an autoclave on a regular basis.

The housing of the dispenser may comprise a lid as the cover pivotable relative to a base of the housing to enable access to chambers for storing the reservoirs. The provision of a lid as a cover enables a reservoir to be refilled in a simple and efficient manner with a fresh container once a material stored therein has been dispensed.

The control unit may be configured to control and/or to regulate at least one of the material driving assemblies, the one or more nozzles or applicators, the driver, the one or more pumps, the one or more valves, the one or more piezo elements, parameters relating to the foregoing and combinations of the foregoing. In this way the correct amount of 1K material can be dispensed in a controlled and/or regulated manner in order to avoid excessive use of materials that then have to be discarded.

The one or more reservoirs may each be filled with a dental 1K material, such as an adhesive, an etching agent, a cleaning agent, a whitening agent, a topical agent, medicinal fluids, cremes, ointments etc. Such materials are typically found in a dental or medical practice and used by the corresponding dental or medical professional in the treatment of patients.

At least one of the one or more reservoirs may be formed by a replaceable container, such as a sachet, a cartridge, and a barrel.

In this connection the replaceable container can be inserted into the dispenser via the lid, at the middle of the dispenser between a proximal and a distal end of the dispenser, either from above into a top side of the dispenser (the side at which the button is arranged) or from the side, i.e. a side directly adjacent to the top side, via a slider or flap. Alternatively the cartridge can be inserted between the middle and the distal end in a manner similar to a fountain pen. Further alternatively the cartridge can be inserted via the proximal end.

Such replaceable containers simplify the use of the dispenser. In this way the dispenser can be refilled in a fast, facile and cost effective manner.

The dispenser may comprise a filling level indicator. Such an indicator can indicate a continuous change in the filling level e.g. using a scale present at e.g. a window of the dispenser, with the window showing the reservoir, or by sensing the amount of material left using a sensor and then transmitting a visible or audible signal via the control unit to the user of the dispenser.

The dispenser may comprise a cartridge. This cartridge can be replaceable making the pen more versatile in use.

The cartridge may be stored in a cartridge holder. In this way an as compact as possible assembly can be realised.

The cartridge holder may be releasably held at an actuator housing. In this way the cartridge holder or the cartridge stored therein can be replaced in simple manner once the material stored in the cartridge has run out or past its shelf life.

The dispenser may further comprise a piston rod. Such a piston rod is a simple to utilize component of the material driving assembly.

The piston rod may be rotatable relative to the actuator housing and/or relative to a further component of the dispenser during dispensing.

The piston rod may have a non-circular cross-section. In this way a rotation of the piston rod can be inhibited more easily simply by forming a corresponding part with a complementary shaped cross-section.

The piston rod may be axially moveable relative to the dispenser in the dispensing position. In this way the piston rod can drive the material out of the dispenser by moving relative to the dispenser.

The piston rod may be axially moveable towards and into the cartridge. In this way an as compact as possible design can be realised.

The piston rod may be guided in a ratchet cage. Such an actuation mechanism can be formed in an as compact as possible manner.

The ratchet cage may be biased with respect to the actuator housing. This leads to beneficial dispensing results.

The ratchet cage may be biased with respect to the cartridge and/or the cartridge holder. In this way the ratchet cage may only be engaged if the cartridge and/or the cartridge holder are attached at the dispenser.

The dispenser may further comprise a ratchet cylinder. This can advantageously be used as a part to drive the material driving cylinder once the button has been pressed.

The ratchet cylinder may be configured to engage the ratchet cage. In this way a swift and simple transfer of sliding motion into rotational movement is achieved.

At least one of the ratchet cage and the ratchet cylinder may comprise one or more projections that engage one or more recesses present at at least one of the ratchet cage and the ratchet cylinder. In this way the two components can be configured to engage one another in an as simple as possible manner.

Preferably, the piston rod comprises an external thread matching with an internal thread formed in a passage extending through the ratchet cage or ratchet cylinder. In other words, the piston rod and the ratchet cage or the piston rod and the ratchet cylinder are in thread engagement.

According to a preferred embodiment, the ratchet cage is rotationally fixed with regard to the housing of the dispenser. This allows for a transformation of a rotation of the piston rod into a translational movement of the piston rod, in particular if the piston rod and the ratchet cage are in thread engagement.

The dispenser may further comprise a rotatable body. Such a body can be used in low cost and simple to manufactures pen-like dispensers. The rotatable body is preferably used to rotate the ratchet cylinder and consequently also the piston rod. In other words, rotation of the rotatable body causes a rotation of the ratchet cylinder, in particular, in case of the ratchet cage being rotationally fixed.

The rotatable body can be rotated relative to the piston rod. In this way a rotation of the rotatable body relative to the rotation of the piston rod can define a gearing present.

A rotation of the rotatable body may be brought about by pressing an actuator of said dispenser. This enables a simple to manufacture dispenser.

According to an advantageous design of the dispenser, the piston rod may be movable in axial direction of the dispenser and rotationally fixed with regard to the housing of the dispenser. Furthermore, the rotatable body may comprise a thread formed in a passage extending through the rotatable body and matching the external thread of the piston rod. Due to the rotational fixation of the piston rod, a rotation of the rotatable body leads to an axial or linear displacement of the piston rod. Preferably, the piston rod is guided inside a guidance which comprises a cavity having a non-circular cross-section corresponding to the non-circular cross section of the piston rod, which also allows for said rotational fixation of the piston rod. Preferably, the guidance extends parallel to the axial direction of the dispenser. The guidance may also be formed as a channel.

The actuator may be configured to engage a cam. The cam can be displaced linearly for dispensing material from the dispenser.

The actuator may be configured to deflect the cam along the longitudinal axis. This aids in bringing about the movement in parallel to the longitudinal axis.

An engagement respectively a deflection of the cam may bring about a rotation of the rotatable body.

Preferably, the cam is an inclined surface on an outer surface of a cylinder slideably accommodated inside the actuator housing, the inclined surface being inclined with respect to the longitudinal axis of the dispenser. The cam may interact upon activation of the activator with a correspondingly inclined radial abutment formed at the activator, in particular the button or lever, thereby causing a linear movement of the cylinder in axial direction.

The cylinder may comprise one or more channels inclined with regard to the longitudinal axis of the dispenser. In the one or more channels one or more fingers present at an outer surface of the ratchet cylinder are guided. Hence, as the cylinder is moved along the longitudinal axis, the one or more fingers are entrained by the respective one or more channels bringing about a rotation of the ratchet cylinder and the piston rod, causing the piston rod to axially move along the longitudinal axis by means of the threaded engagement between the piston rod and the ratchet cage or the ratchet cylinder.

In this connection it should be noted that additionally or alternatively the fingers could also be arranged at the cylinder and the channels could be arranged at the ratchet cylinder.

The dispenser may comprise a rotary slide or shortly also called a slide translationally moveable in direction of the longitudinal axis of the dispenser's housing and an inner cylinder rotatable about the longitudinal axis of the dispenser's housing, wherein a translational movement of the slide causes a rotation of the inner cylinder. The slide may be associated with the activator, whereas the inner cylinder may be associated with the piston rod. This ultimately allows for transmission of a movement of the activator into a linear movement of the piston rod for a discharge of the 1K material.

The slide may comprise at least one axially extending cantilever beam which upon axial movement of the slide, in particular in direction towards a distal end opposite to the proximal end of the housing, is engageable with a saw tooth cam formed on the inner cylinder, in particular thereby turning the inner cylinder. This allows an even more compact design of the dispenser without the rotary member or rotatable body arranged between the slide and the inner cylinder.

Preferably, the at least one cantilever beam comprises, in particular at its free end, a radially inwardly projecting nib which upon the axial movement of the slide interacts with an inclined surface of a tooth of the saw tooth cam, in particular thereby turning the inner cylinder. This allows for a compact design as well as a reliable functioning of the dispenser.

According to a preferred design, the slide may comprise a sleeve body, in particular a cylindrical sleeve body, and the at least one cantilever beam may axially extend from the sleeve body.

In order to retract the slide into its initial position, thereby also allowing the activator to return into its initial position, a slide spring may be axially arranged between the slide and the inner cylinder. The activator can then be pushed or activated again to dispense a further dose from the dispenser.

In particular, the slide spring may be axially arranged between the slide's sleeve body and a shoulder formed by the saw tooth cam.

Preferably, the the slide spring biases the slide and the inner cylinder apart upon release of the dispense activator. In particular, the slide spring biases the slide towards the proximal end of the dispenser and/or the inner cylinder towards the distal end of the dispenser.

Furthermore, the slide spring may be radially arranged between the at least one cantilever beam and an outer wall of the inner cylinder stepped radially inwardly with regard to the saw tooth cam. This allows for a comparably compact design of the dispenser.

In order to avoid a rotation of the piston rod in the reverse direction, the dispenser may further comprise at least one spring elastically deflectable locking element radially protruding from the inner cylinder and interacting with a circular saw tooth cam provided at an inner circumference of the main body. Consequently, an unwanted axial reverse movement of the piston rod is avoided.

The cartridge holder may be configured to receive a cannula. In this way different cannulas can be attached between different patients and/or different treatments of one and the same patient.

The cartridge holder may have a click notch system for attachment to the actuator housing. In this way an audible feedback can be provided to the user of the dispenser on a correct attachment of the cartridge holder at the dispenser.

The cartridge holder may have a quarter turn coupling optionally with double start thread for attachment to the actuator housing. Such a coupling can be attached in a similar and reliable manner.

The dispenser may further comprise a resetting mechanism. In this way e.g. the piston can be reset into a starting position so that a fresh cartridge or cartridge holder can be attached to the dispenser.

The resetting mechanism may be formed between the ratchet cage and the ratchet cylinder. In this way a compact and simply assembly can be realized.

The resetting mechanism may further comprise one or more springs. Such springs can be used to bias parts into and out of engagement with respect to one another.

The resetting mechanism may be configured to rotate relative to the housing when no dispensing unit is attached to the housing and to thereby move the piston rod in a distal direction back into the housing. In this way the piston rod can be reset by simply turning it back into the housing on replacement of the cartridge holder with fresh material to be dispensed.

The resetting mechanism may be configured to be pushed axially in the distal direction along the longitudinal axis by the cartridge holder when the cartridge holder is being mounted to the housing and to thereby become rotationally locked with respect to the housing. In this way the resetting mechanism can be used to lock the piston rod in such a way that it cannot be rotated relative to the housing with a mounted cartridge holder, but allow the piston rod to be rotated relative to the housing for resetting.

The resetting mechanism may be configured to be directly contacted and pressed axially by the cartridge holder upon mounting the dispensing unit to the housing. In this way the component that is added and/or removed can be used to bias the resetting element between the resetting position and a mounted position.

The cartridge holder may be integrally formed with the cartridge or may be configured to receive a separate cartridge. In this way an as compact as possible design can be achieved. In this connection it should be noted that it is preferred if the cartridge holder is mounted flush with the housing of the dispenser so that the tactile handling of the dispenser can be improved.

The piston rod may be rotationally fixed to the resetting mechanism and free to move in an axial direction of the dispenser with respect to the resetting mechanism. In this way the piston rod is free to rotate for the purpose of resetting.

The resetting mechanism may be configured to be moved along the axial direction of the dispenser when the cartridge holder is being attached to the housing of the dispenser until the resetting mechanism touches a coupling site of the housing where the resetting mechanism is rotationally fixed with respect to the housing.

The resetting mechanism may comprise a first set of engagement features, for example teeth, with which the resetting mechanism is rotationally fixed to the housing when the dispensing unit is attached to the housing, and wherein the housing may comprise a second set of engagement features, for example teeth, for example at said coupling site, which corresponds to the first set of engagement features of the resetting mechanism such that said first and second set of engagement features engage with each other to rotationally fix the resetting mechanism with respect to the housing when the dispensing unit is attached to the housing.

The dispenser may further comprise a biasing element, such as a compression spring, e.g. a ratchet spring, that biases the resetting mechanism in the proximal direction.

The dispenser may further comprise a clamping mechanism configured to clamp the piston rod. The clamping mechanism can be a part of the resetting mechanism and be used to reset the dispenser after a cartridge is replaced.

The clamping mechanism may be arranged at the ratchet cage. In this way an as compact as possible design can be achieved that is simple to use.

A part of the clamping mechanism may be integrally formed with the ratchet cage. In this way a more reliable clamping mechanism can be formed in an as compact as possible design.

The clamping mechanism may comprise two or more parts. In this way the clamping effect can be increased.

The two or more parts may comprise an upper cage element, a lower cage element, a fixed cage element, a rotatable cage element and one or more springs. Such components can advantageously be used in the clamping mechanism to form an as compact as possible design.

The one or more springs may be configured to urge the upper cage element and the lower cage element into engagement with the piston rod. In this way the clamping engagement can be reliably ensured through the use of biasing elements.

The upper cage element and the lower cage element may be configured for a symmetrical engagement of the piston rod. By applying a symmetric clamping force at the piston rod, this can be reliably held during a dispensing operation.

The clamping mechanism may be configured to clamp the piston rod during dose dispensing and to be released during resetting of the dispenser. In this way one can ensure an accurate dosing on using the dispenser, as the piston rod is fixed in its position during dispensing.

The piston rod may have a non-circular outer cross-section and the clamping mechanism may have a cross-section shaped complementary to the non-circular piston rod, in particular in the form of an elongate slot. In this way one can further enhance the clamping effect and avoid rotation of the piston rod during the dispensing process.

The piston rod may be configured to be rotated relative to the clamping mechanism for resetting. For example, the piston rod can be rotated by an angle selected in the range of 30 to 120°, preferably in the range of 45 to 105°, relative to the clamping mechanism for resetting. In this way the outer circumference of the piston rod can be aligned with the clamping mechanism to permit movement of the piston rod relative to the clamping mechanism for resetting purposes.

Additionally or alternatively one or more parts of the clamping mechanism can be rotated relative to the remaining parts of the clamping mechanism. For example, the one or more parts of the clamping mechanism that can be rotated relative to the remaining parts of the clamping mechanism can be rotated by an angle selected in the range of 30 to 120°, preferably in the range of 45 to 105°, relative to the remaining parts of the clamping mechanism for resetting. In this way the outer circumference of the piston rod can be aligned with the clamping mechanism to permit movement of the piston rod relative to the clamping mechanism for resetting purposes.

One or more parts of the clamping mechanism may comprise an elongate hole. Such an elongate hole is comparatively simple to manufacture and can be used with a complementary shaped piston rod.

One or more parts of the clamping mechanism may be configured to slide relative to the remaining parts of the clamping mechanism. The clamping action of the clamping mechanism can thus be initiated by a sliding movement.

Preferably, the piston rod comprises a toothed configuration that is engaged by a clicker member resulting in a haptic and/or acoustic feedback during a proximal movement of the piston rod.

Such a configuration allows a user a more exact dispense operation with the multi-use dispenser and a further specified operation of the dispense operator by only partially operating the dispense activator if desired.

Preferably, the dispense mechanism comprises a piston rod retraction configuration allowing a retraction of the piston rod after a dispense operation with a first applicator for replacing the first applicator with a second applicator for a further dispense operation with the second applicator.

Such a configuration allows the easy resetting of the multi-use dispenser for the usage with the second applicator after a dispense operation with the first applicator. Such a retracting configuration can be manually or automatically operated. In automatic configurations, the retracting movement of the piston rod can be triggered by a decoupling of the first applicator from the multi-use dispenser or can result from a coupling of the second applicator to the multi-use dispenser.

Further preferably, the piston rod retraction configuration is configured such that the piston rod can be turned by 90° about its longitudinal axis, in which position the piston rod can be retracted.

Such a retracting configuration is quite robust and reliably allows a very quick retracting of the piston rod.

In particular, the piston rod retraction configuration comprises a smooth circumferential section of the piston rod.

Such an implementation is quite simple but reliable.

Alternatively, the piston rod retraction configuration is configured such that the piston rod can be retracted by a screwing movement of the piston rod.

Such a configuration is very robust and, thus, highly reliable.

In particular, the piston rod retraction mechanism is formed by a thread about the circumference of the piston rod.

Such an implementation is quite simple and allows a very robust overall configuration.

In particular, the piston rod retraction configuration comprises a piston rod retraction spring and a retraction spring support for the retraction operation of the piston rod. The piston rod retraction spring is configured to be loaded during the dispense operation and to be relaxed during and for the retraction operation of the piston rod.

This configuration facilitates a retraction operation for the piston rod substantially.

Preferably, the main body and/or the rear body comprises a window or cutout through which an indicator drum fixed to the piston rod and indicating the amount of residual material within a reservoir of the applicator, is visible.

Thus, it is possible to monitor the charging level of the reservoir in a pleasant and reliable manner.

A further aspect of the present invention refers to an application set comprising one of the above described multi-use dispensers and at least one, in particular at least two, applicator(s) for such a multi-use dispenser, in particular for dental ap-plications. Each applicator comprises a cartridge body defining a reservoir filled with an, in particular dentistry applicable, substance. In other words, the applicator may form a cartridge holder storing a cartridge or the cartridge body. The substances from different applicators can be the same or can differ from each other. Each cartridge body is connected to a dispense body with a dispense opening through which the substance from the corresponding reservoir can be dispensed. A piston is provided movably along the corresponding reservoir within each cartridge body and is configured to dispense the substance from the corresponding reservoir upon movement in a proximal direction towards the dispense body. Each applicator comprises, in particular keyed, connection means, in particular in the form of Luer-Lock or bayonet connection means, configured to couple the respective applicator to the connection means of the multi-use dispenser in a re-leasable manner, such that the piston is movable in the proximal direction by a dispense operation of the multi-use dispenser.

Such a configuration is quite simple and, thus, cost efficient, while allowing the easy use of the multi-use dispenser with various applicators.

Preferably, the dispense body of each applicator comprises a distribution means at, in particular around, the dispense opening.

Such a distribution means allows an improved application and, in particular, a homogeneous distribution of the substance.

In particular the distribution means comprises a brush configuration at, in particular around, the dispense opening. Preferably the brush configuration is formed as a micro toothbrush.

Such an implementation is quite simple but highly effective.

Alternatively, the distribution means comprises a foam configuration at, in particular around, the dispense opening.

Such an implementation depicts a simple and also highly effective alternative to the above implementation.

Preferably, the cartridge body and the dispense body, and in particular also the distribution means, of each applicator are formed from a single material.

Such a configuration allows a direct observation of the dispense movement of the piston and, thus, an easy observation of the dispense operation.

Preferably, the cartridge body and the dispense body, and in particular also the distribution means, of each applicator are formed as single one-piece member.

Such a configuration is very robust.

Preferably, each applicator comprises a plug or cap configured to be coupled releasably to the dispense body to seal the dispense opening.

Before and after the dispense operation, the cap allows to seal the dispense opening preventing the leakage of (remaining) substance form the reservoir.

According to a further aspect the object is satisfied by a method of preparing a dental dispenser, the method comprising the steps of:
providing a dispenser having a filling indicator,
inserting a container into the dispenser,
monitoring the amount of material stored in the dispenser, and optionally dispensing material stored in the dispenser following activation of the dispenser via an activator thereof.

In this way a dispenser can be made available that is prepared for use in a fast, facile and cost effective manner.

Further embodiments of the invention are described in the following description of the figures and/or the dependent claims attached to this specification. The invention will be explained in the following in detail by means of embodiments and with reference to the drawing in which is shown:
- Fig. 1: a perspective view of first kind of pen-type dispenser and replaceable containers and hubs with various applicators;
- Fig. 2: a perspective view of second kind of pen-type dispenser;
- Fig. 3: a perspective view of a first kind of dispensing station and of an associated applicator;
- Fig. 4: a side view of the dispensing station of Fig. 3;
- Fig. 5: a block diagram showing components of a dispenser;
- Fig. 6: a block diagram showing components of a further dispenser;
- Fig. 7: a block diagram showing electronic components of a dispenser;
- Fig. 8: a block diagram showing electronic components of a further dispenser;
- Fig. 9: a perspective view of a second kind of dispensing station and of an associated applicator;
- Fig. 10: a view of components of a further kind of pen-type dispenser;
- Fig. 11: a view of components of yet a further kind of pen-type dispenser;
- Fig. 12: a view of components of yet a further kind of pen-type dispenser;
- Fig. 13a to i: various views of components of a further kind of pen-type dispenser;
- Fig. 14a to e: various views of components of yet a further kind of pen-type dispenser;
- Fig. 15a to c: various views of different kinds of a clamping mechanism;
- Fig. 16: a view of a kind of pen-type dispenser as described in connection with Fig. 10 having a clamping mechanism arranged therein;
- Fig. 17: a view of a kind of pen-type dispenser as described in connection with Fig. 11 having a clamping mechanism arranged therein;
- Fig. 18: a view of a kind of pen-type dispenser as described in connection with Fig. 12 having a clamping mechanism arranged therein;
- Fig. 19: a view of components of a further kind of pen-type dispenser;
- Fig. 20: an exploded view of components of yet a further kind of pen-type dispenser;
- Fig. 21: a perspective detail of the pen-type dispenser of Fig. 20;
- Fig. 22: a cross-sectional view of the pen-type dispenser of Fig. 20;
- Fig. 23: a part sectional side view of a detail of the dispenser of Fig. 20;
- Fig. 24: a sectional view of another exemplary multi-use dispenser in accordance with the present invention in a non-operated state and coupled to a schematically illustrated applicator;
- Fig. 25: a perspective cross-section of the rear part of the multi-use dispenser of Fig. 24 looking in the distal direction;
- Fig. 26: a perspective view of another exemplary embodiment for an applicator to be used with the multi-use dispenser of the present invention;
- Fig. 27: a perspective view of a further exemplary embodiment for an applicator to be used with the multi-use dispenser of the present invention;
- Fig. 28: a perspective view of a yet another exemplary embodiment for an applicator to be used with the multi-use dispenser of the present invention; and
- Fig. 29: an exploded view of a further exemplary multi-use dispenser in accordance with the present invention.

In the following the same reference numerals will be used for parts having the same or equivalent function. Any statements made having regard to the direction of a component are made relative to the position shown in the drawing and can naturally vary in the actual position of application.

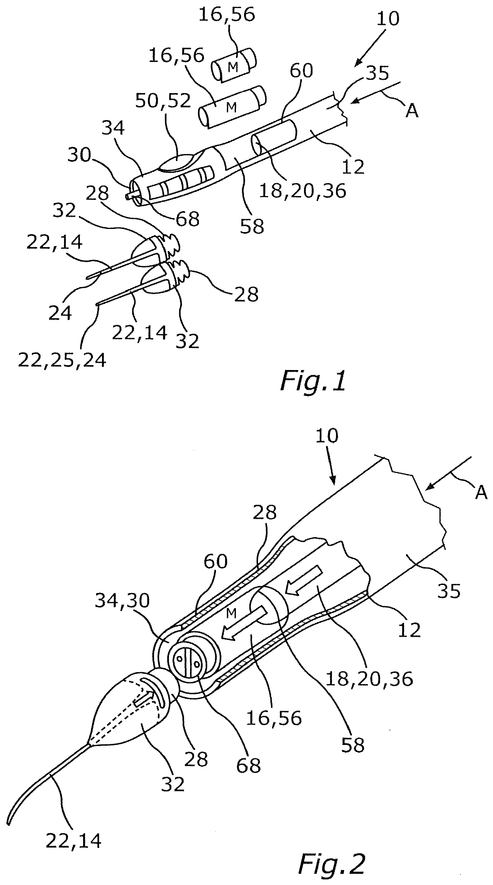

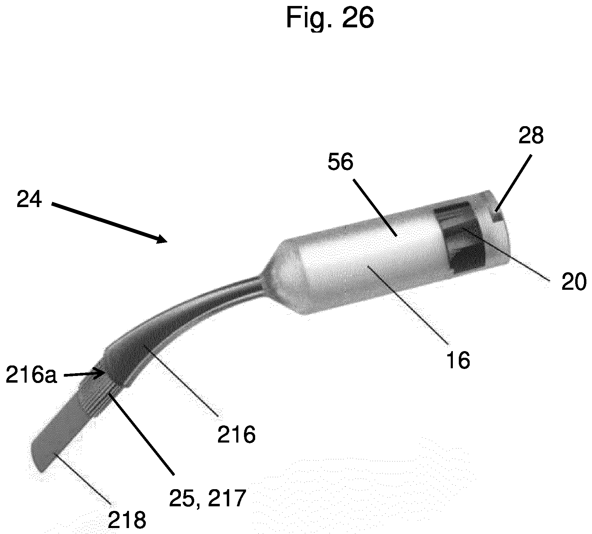

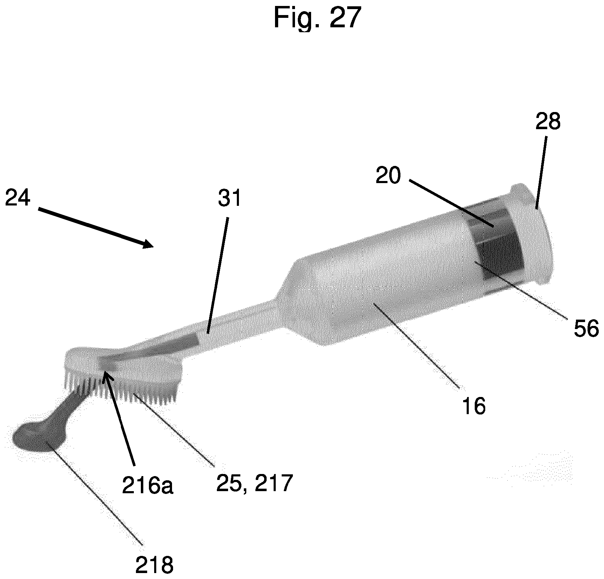

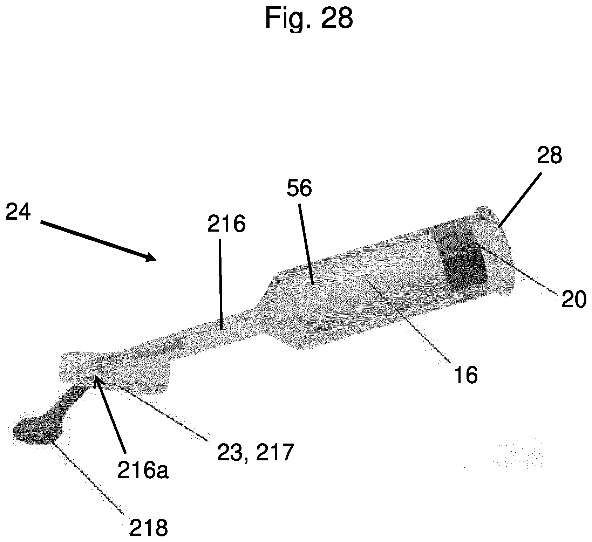

Fig. 1 shows a perspective view of first kind of pen-type dispenser 10 and replaceable containers in the form of cartridges 56 as reservoirs 16 that can be inserted into the pen-type dispenser 10. Also shown are replaceable hubs 32 that can be connected to dispenser 10 to repeatedly detach and re-attach nozzles 14 to and from the dispenser 10. The hubs 32 can be equipped with various applicators 24 comprising various distribution means 217, such as a cannula 22 and/or a brush 25 (Figs. 26 and 27), such as a micro-brush. Also a foam type applicator or foam configuration 23 (Fig. 28) or other kind of applicator may be made available. In general, a hub 32 can also be referred to as applicator 24.

The hub 32 comprises first connection means 28, e.g. an outer thread (Fig.1) or a part of a Luer Lock (Fig. 2) via which the hub 32 can be connected to the dispenser 10.

A proximal end 34 of the housing 12 comprises second connection means 30, e.g. an inner thread (Fig. 1) or a socket of a Luer Lock (Fig. 2) which are capable of engaging the corresponding first connection means.

In this connection it should be noted that the first and second connection means 28, 30 can also be used to code the dispensers in order to e.g. avoid cross-contamination between different applicators intended for different 1K materials.

Such pen-type dispensers generally have an elongate shape extending along a longitudinal axis A between the proximal end 34 and a distal end 35 of the dispenser 10.

In this connection it should be noted that proximal refers to that part of the dispenser 10 that in use thereof is closer to the patient and distal refers to that part of the dispenser 10 that in use thereof is further away from the patient.

Fig. 2 shows a perspective view of second kind of pen-type dispenser 10. Like the dispenser 10 of Fig. 1 the dispenser 10 of Fig. 2 is a reusable pen-type dispenser.

The dispenser 10 comprises a housing 12, and the nozzle 14 for dispensing a 1K material M, the nozzle 14 being attached to the housing 12 via the first and second connection means 28, 30. The dispenser 10 further comprises a reservoir 16 for storing the 1K material M, the reservoir 16 being arranged within the housing 12 of the dispenser 10. The dispenser 10 also comprises a material driving assembly 18 configured to act on the reservoir 16 via a plunger 20 or piston 20 to drive the respective 1K material M through the nozzle 14, with the material driving assembly 18 at least partly being arranged within the housing 12.

The reservoir 16 is arranged in a chamber 58 of the dispenser, with the chamber 58 being arranged within a cover 60 of the dispenser 10.

The cover 60 is generally a part of the housing 12 and can be a part detachable from the housing 12 via a screw-type connection in a manner similar to a fountain pen for replacement of the cartridge 56.

In an alternative design the cover 60 may be a hatch that can be moved relative to the housing 12, e.g. in a sliding arrangement or a pivotable arrangement to permit access to the chamber 58 for replacement of a spent cartridge 56.

In a further alternative design the cartridge 56 could be inserted via the proximal end 34 via the second connection means 30 once the nozzle 14 has been removed from the dispenser 10.

A window may be present in the housing 12 of the dispenser 10, with the window showing a content of a respective cartridge 56 inserted into the dispenser 10.

As indicated in Fig. 1, the dispenser 10 further comprises a passage 68 connecting the nozzle 14 with the chamber 58. The material is guided from the cartridge to the proximal end of the nozzle 14 via this passage 68 without coming into contact with other parts of the dispenser 10.

In order to activate the dispenser this further comprises an activator 50 in the form of a button 52. The activator 50 is associated with the nozzle 14 and the material driving assembly 18 for activating a movement of the material driving assembly 18 to dispense the material M via the nozzle 14 while the button 52 is pressed.

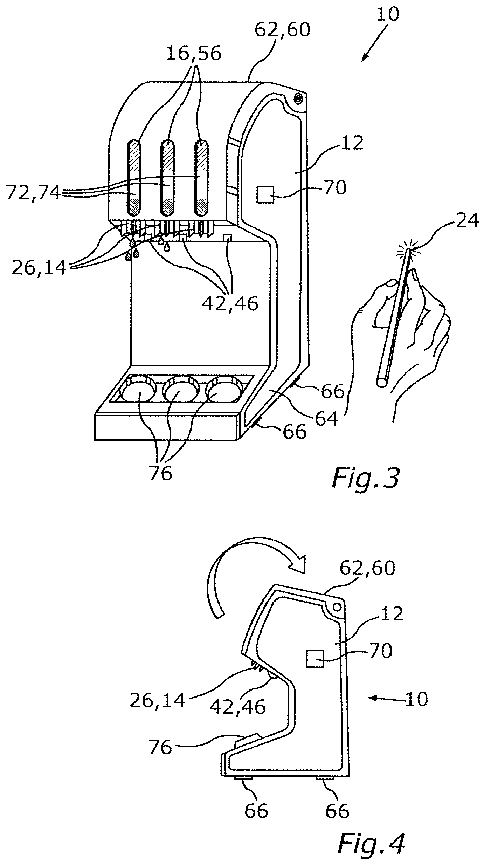

Fig. 3 shows a perspective view of a first kind of dispensing station as the dispenser 10 and of the associated patient applicator 24 arranged at a handle. The dispensing station may optionally be configured to be installed at a dental unit, i.e. a dentist's chair (not shown).

In this connection the handle may be a rod at which a respective patient applicator 24 is attached for applying the material M in a patient's mouth.

The dispenser 10 comprises three nozzles 14 as outlets 26 for dispensing three respective 1K materials M from three different reservoirs 16, with the three nozzles 14 being attached to the housing 12 and connected or connectable to the reservoirs 16 that are arranged within the housing 12.

The dispenser 10 further comprises three different material driving assemblies 18 configured to act and cooperate with the three reservoirs 16 to drive the respective 1K material M through a respective one of the three nozzles 14. The material driving assemblies 18 are completely arranged within the housing 12.

In order to replace the containers of the dispenser 10 this comprises a lid 62 as the cover 60. The lid 62 is pivotable relative to a base 64 of the housing 12 to enable access to chambers 56 for storing the reservoirs 16.

The base 64 comprises three drip pans 76 for catching excess material M that may drip from the respective outlet 26. In this connection it should be noted that rather than having one drip pan 76 per nozzle, the base may comprise a single drip pan 76 for all nozzles 14 of the dispenser 10.

The dispenser also comprises the activator 50 in the form of a sensor assembly 42 for sensing the patient applicator 24 in the proximity of one of the three nozzles 14, i.e. beneath the respective nozzle 14 e.g. within one, two or three cms around each nozzle 14, via respective sensors 44 for activating a dispensing of materials M from the dispenser 10.

The sensor assembly 42 may comprise a position resolving sensor and/or several individual sensors 44, with monitoring areas of the position resolving sensor and/or the individual sensors 44 of the sensor assembly 42 being associated with a respective one of the one or more nozzles 14.

The dispenser 10 comprises three filling level indicators 72 in the form of windows 74. The windows 74 may optionally be provided with a scale in order to indicate how full the respective reservoir 16 is.

The indicators 72 indicate a continuous change in the filling level e.g. using a scale present at the window 74 or simply by showing full/empty reservoirs 16 via the windows 74. It is also possible that the further sensor 70 is capable of detecting a filing level and then transmitting a signal related thereto to the control unit 46 that then initiates a visible or audible signal to the user of the dispenser 10.

In this connection it should be noted that the dispenser 10 shown in connection with Figs. 1 and 2 may also comprise a filling level indicator 72 either in the form of a window or as a visible or audible signal output by the control unit 46.

Fig. 4 shows a side view of the dispenser 10 of Fig. 3. The dispenser 10 comprises feet 66 on which the dispenser can stand. If the dispenser is to be attached at a dental unit, i.e. a dentist's chair, then the feet 66 are removed and the dispenser 10 is attached to the dental unit via e.g. a screwed connection in order fix the dispenser 10 the dental unit. The nozzles 14 are fixed to the dispenser 10 as an outlet 26.

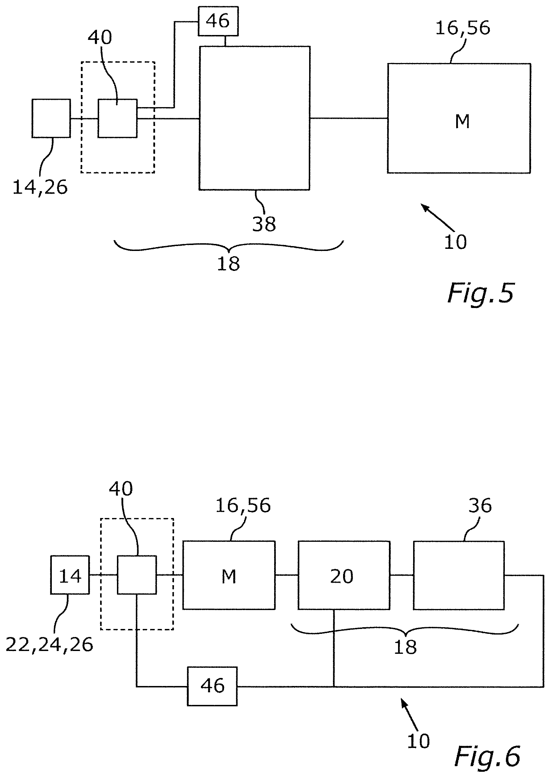

Fig. 5 shows a block diagram showing components of the dispenser 10. The dispenser 10 can either be a pen-type dispenser as shown e.g. in Figs. 1 and 2 or a dispensing station as shown in Figs. 3, 4 and 9.

The dispenser 10 comprises a control unit 46 arranged within the housing 12. The control unit 46 is configured to initiate an activation of the respective material driving assembly 18 to act on the respective reservoir 16 to dispense the respective 1K material M via said nozzle 14 and/or outlet 26.

The material driving assembly 18 comprises a pump 38 optionally connected to a valve 40. On sensing an activation of the dispenser 10 the pump is driven in order to dispense material M from the reservoir 16.

The valve may be a dosage valve 40 that permits the through flow of a pre-determined amount of material M per unit time in order to dispense either a pre-determined amount of material M, or an amount defined by the duration the activator 50 being activated in use of the dispenser 10. The control unit 46 can control and regulate the respective components of the dispenser 10.

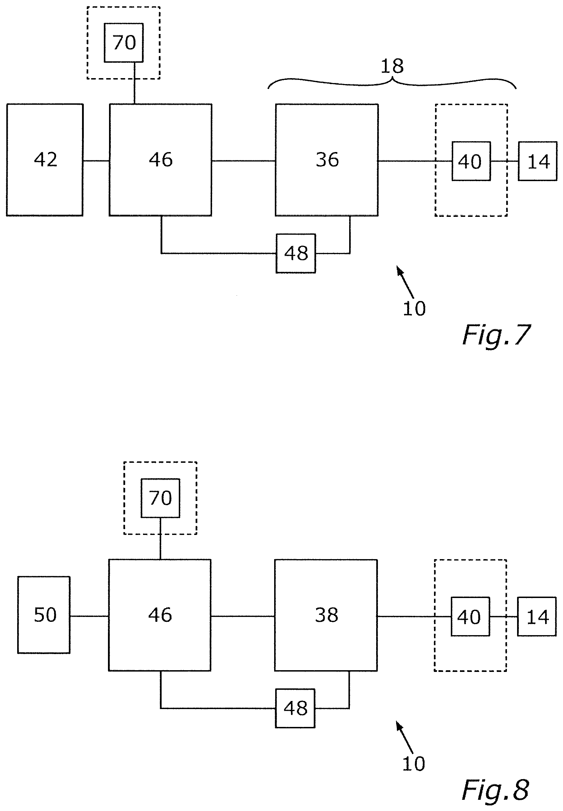

Fig. 6 shows a block diagram showing components of a further dispenser 10. The dispenser 10 can either be a pen-type dispenser as shown e.g. in Figs. 1 and 2 or a dispensing station as shown in Figs. 3, 4 and 9. The material driving assembly 18 comprises the plunger 20 that is driven by a driver 36. The driver 36 may be an electric drive unit, e.g. an electric motor supplied with energy from a power supply 48 (see Figs. 7 and 8, e.g. present at a dentist's chair), a pneumatic drive unit e.g. driven by pressurized air available at a dentist's chair, or a mechanical drive unit.

On actuation of the activator 50 the control unit 46 activates the material driving assembly 18 by activating the driver 36 to drive the plunger 20 towards and possibly into the container, e.g. the cartridge or a sachet.

In order to regulate an amount dispensed, the valve 40 may optionally be provided in a manner similar to the valve 40 mentioned in connection with Fig. 5.

Fig. 7 shows a block diagram showing electronic components of the dispenser 10. The dispenser 10 can either be a pen-type dispenser as shown e.g. in Figs. 1 and 2 or a dispensing station as shown in Figs. 3, 4 and 9.

The control unit 46 is connected to the sensor assembly 42 that comprises the sensor 44 for sensing the presence or absence of the patient applicator 24. On receiving a signal from the sensor 44 that the patient applicator 24 is present in the pre-defined proximity of the sensor 44, the control unit 46 initiates an activation of the material driving assembly 18. The material driving assembly 18 shown comprises the driver 36 to drive the material M towards the nozzle 14.

A valve 40 may optionally be present between the driver 36 and the nozzle 14 for controlling and regulating an amount of material M dispensed via the nozzle 14 per unit time. In this connection it should be noted that the valve 40 may be arranged between the reservoir 16 and the nozzle 14, e.g. at the passage 68.

A further sensor 70 may also be provided which provides further parameters and/or signals from the dispenser 10 and/or of the environment of use of the dispenser 10. Such sensors and/or signals may comprise pressure sensors, temperature sensors, position sensors etc.

The power supply can be either a fixed power supply in the form of cables provided at a dentist's chair or in the form of a battery integrated into the pen-type dispenser.

Fig. 8 shows a block diagram showing electronic components of a further dispenser 10. The dispenser 10 can either be a pen-type dispenser as shown e.g. in Figs. 1 and 2 or a dispensing station as shown in Figs. 3, 4 and 9.

The difference between the dispenser 10 of Fig. 7 and Fig. 8 is that rather than using the driver 36 to drive material M out of the reservoir 16 as is the case with Fig. 7, the dispenser 10 of Fig. 8 is provided with the pump 38.

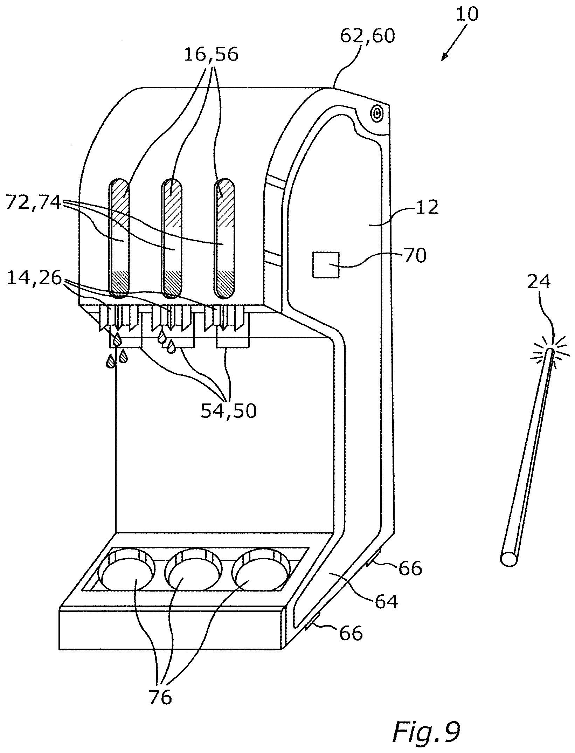

Fig. 9 shows a perspective view of a second kind of dispensing station as the dispenser 10 and of an associated patient applicator 24 arranged at the handle.

The dispenser comprises three nozzles with a lever 54 being arranged at each nozzle as the activator 50 for activating the material driving assembly 18 associated with the respective nozzle to dispense the 1K material M via said nozzle 14 for the desired material M.

For all of the dispensers 10 shown herein the control unit 46 is configured to sense activation of the activator 50 on the basis of signals transmitted from the activator 50 to the control unit 46.

The control unit 46 is configured to control and/or to regulate the various material driving assemblies 18, i.e. the respective drivers 36, the respective pumps 38, the respective valves 40, on the basis of parameters relating to the foregoing and combinations of the foregoing, in order to dispense pre-defined amounts of material M per unit time.

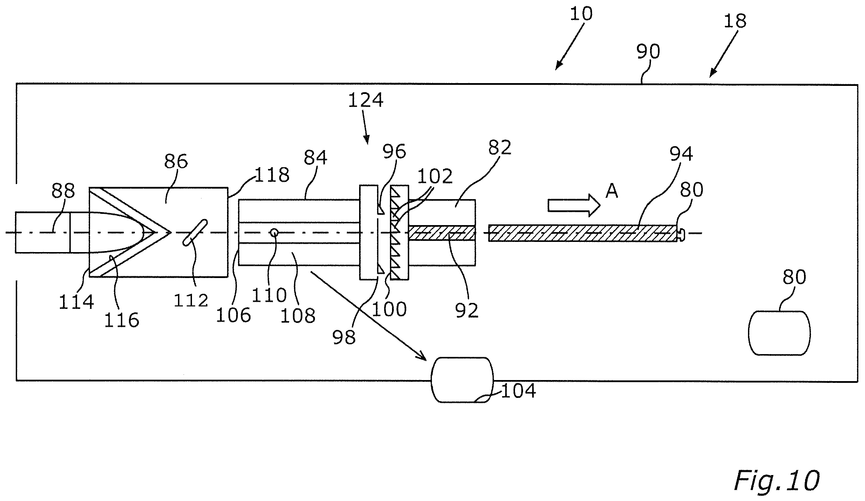

Fig. 10 shows a schematic view of components of a further kind of pen-type dispenser 10. The pen type dispenser 10 comprises a so-called body-knock to ratchet system as the material driving mechanism 18, i.e. as the actuation mechanism for dispensing material M.

The components of the body-knock to ratchet material driving mechanism 18 comprise a piston rod 80 that has a non-circular outer cross-section. The non-circular cross-section, i.e. in the example shown having two flattened sides, is provided so that the piston rod 80 is not rotatable relative to some of the components of the body-knock to ratchet material driving mechanism 18 at least during a dispensing process.

As will be described later, the activator 50 and the piston rod 80 may together form a dispense mechanism 61.

The body-knock to ratchet material driving mechanism 18 further comprises a ratchet cage 82 and a ratchet cylinder 84 that can engage one another for the purpose of dispensing and can be disengaged from one another for the purpose of resetting.

The piston rod 80 is arranged within the ratchet cage 82 and the piston rod 80 cannot be rotated relative to the ratchet cylinder 84. This is because the ratchet cylinder 84 has an inner cross-section that is shaped to match the outer cross-section of the piston rod 80.

The piston rod 80 can be moved in the axial direction, i.e. linearly, due to an internal thread 92 present at the ratchet cage 82 that engages an outer thread 94 of the piston rod 80 via which the piston rod 80 can be lifted in the axial direction.

The ratchet cage 82 is fixed inside an actuator housing 90 against turning or movement. The inner thread 92 matches with the piston rod 80 outer thread 94. This will lift the rod based on rod's turn coming from ratchet cylinder 84. It is to be noted that the piston rod 80 of the present examples has a smooth surface at the flattened sides, i.e. the piston rod 80 is not threaded at the flattened sides.

When the ratchet cylinder 84 engages the ratchet cage 82, the thread acting between the ratchet cage 82 and the piston rod 80 causes the piston rod 80 to move along the longitudinal axis A.

The ratchet cylinder 84 comprises ratchet teeth 96 at its end 98 facing the ratchet cage 82. The end 100 of the ratchet cage 82 facing the ratchet cylinder 84 comprises ratchet recesses 102 that are configured to receive the ratchet teeth 98 when the ratchet cage 82 engages the ratchet cylinder 84.

The interior of the ratchet cage 84 has a passage 104, with the passage 104 having a hollow profile matching the non-circular outer profile of the piston rod 80. The piston rod 80 cannot turn inside this passage 104, but can slip along this profile of the passage 104 in direction of the longitudinal axis A.

The ratchet cylinder 84 is received within a cylinder 86. The cylinder 86 is configured to move the ratchet cylinder 84 and to thereby effect a movement of the ratchet cylinder 84. This movement is a rotational movement.

An outer surface 108 of the ratchet cylinder 84 comprises one or more fingers 110. The one or more fingers 110 are guided in one or more respective channels 112 present in the cylinder 86. As the cylinder 86 is moved along the longitudinal axis A, the one or more fingers are entrained by the respective one or more channels 112 bringing about a rotation of the ratchet cylinder 84 causing the piston rod 80 to axially move along the longitudinal axis A by means of the threaded engagement between the piston rod 80 and the ratchet cage 82.

In this connection it should be noted that additionally or alternatively the fingers 110 could also be arranged at the cylinder 86 and the channels 112 could be arranged at the ratchet cylinder 84.

A length of the channel 112 and its pitch in relation to a pitch of the thread of the piston rod 80 provides a gear ratio for the movement of the piston rod 80 and can be selected in dependence on the desired lift of the piston rod 80 for the desired application, i.e. whether more or less material M should be dispensed using the dispenser 10.

An end 114 of the cylinder 86 remote from the end 118 facing the ratchet cylinder 84 is formed as a hollow cone 116. An anchor 88 can be moved towards this hollow cone 116.

An end 106 of the ratchet cylinder 84 is received within the cylinder 86.

The elements anchor 88, cylinder 86, ratchet cylinder 84, ratchet cage 82 are axially aligned with each other. Activation of the dispenser 10 is achieved by bending, i.e. deforming, a part of the housing of this unit, the fixed anchor 88 is deflected from the central axis and, through contact with the hollow cone 116, will displace the cylinder 86 in the longitudinal direction along the longitudinal axis A, which ultimately causes the rotary movement of ratchet cylinder 84 and thus of rod 80.

In this connection it should be noted that the arrangement could also be reversed, with the hollow-cone being fixed and the anchor being a part of the cylinder 86.

Thus, activation of the dispenser 10 brings about an axial movement of the cylinder 86 resulting in a rotation of the ratchet cylinder 84 leading to an axial displacement of the piston rod 80 bringing about a dispensing of material M stored in a cartridge of the dispenser 10.

A resetting mechanism 124 is provided by the cooperation between the ratchet cage 82 and the ratchet cylinder 84. When the ratchet cage 82 is disengaged from the ratchet cylinder 84, e.g. supported by a cage spring 126, the ratchet cylinder 84 can rotate freely relative to the ratchet cage 82 and thereby rotate the piston rod 80 in the opposite direction to the dispensing direction, i.e. from right to left in Fig. 10 to bring the piston rod 80 back into its initial position.

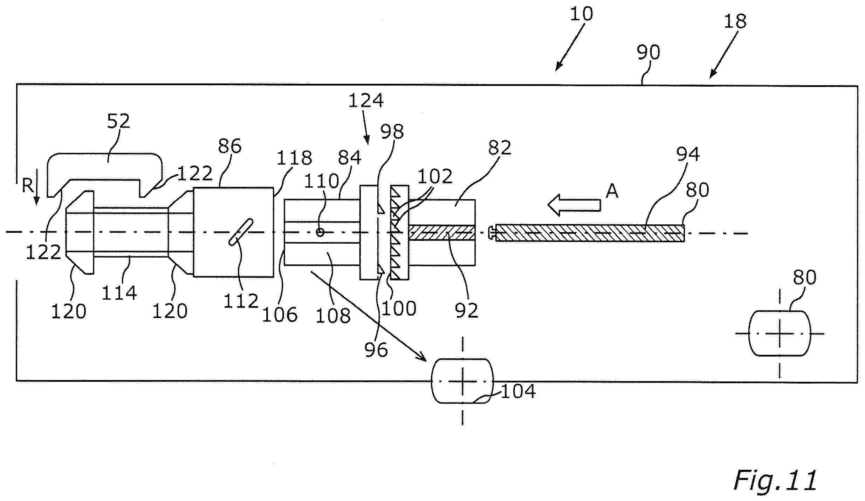

Fig. 11 shows a schematic view of components of yet a further kind of pen-type dispenser 10. The pen-type dispenser 10 comprises a so-called side-knock to ratchet system as the material driving mechanism 18.

The difference to the embodiment shown in Fig. 10 lies in the shape and arrangement of the respective cylinder 86 and a button 52 that replaces the anchor 88. The remaining parts of the mechanism work in a similar manner. However, the direction in which the piston rod 80 is moved is reversed between the two designs. In Fig. 10 the movement is from left to right in the view of the drawing on dispensing and in Fig. 11 the movement is from right to left in the view of the drawing.

The outer surface of the cylinder 86 comprises at minimum one and preferably two surfaces inclined with respect to the longitudinal axis A acting as cams 120. The button 52 comprises at least one and preferably two radial abutments 122 also having surfaces inclined with respect to the longitudinal axis A.

The inclined surfaces of the abutments 122 and of the cams 120 are arranged at least substantially in parallel to one another or in parallel to one another such that on pressing the button 52 in the radial direction R towards the cylinder 86 the abutments 122 entrain the cams 120 resulting in an axial movement of the cylinder 86 along the longitudinal axis A, leading to a rotation of the ratchet cylinder 84 in a manner as described above and ultimately bringing about a displacement of the piston rod 80.

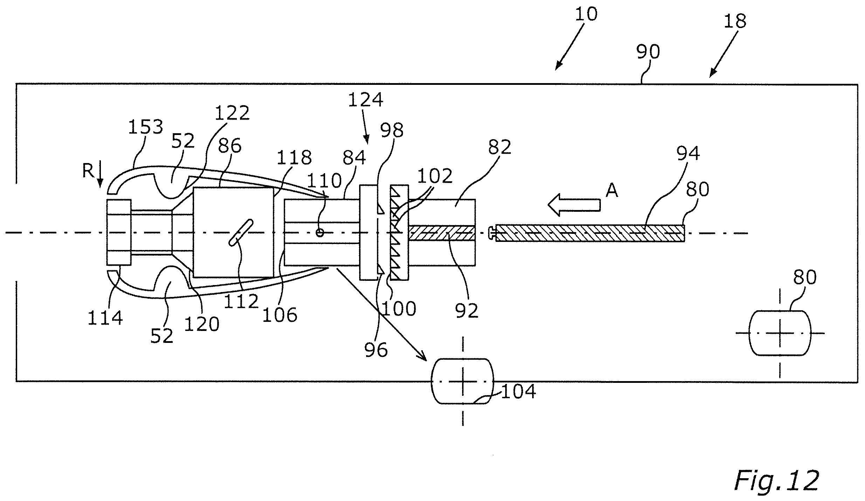

Fig. 12 shows a view of components of yet a further kind of pen-type dispenser 10. The pen-type dispenser 10 comprises a so-called radial elastic side-knock to ratchet-system as the actuation mechanism 18.

The button-cover 153 of the embodiment shown in Fig. 12 extends radially around the cam 120 of the cylinder 86. On pressing the button-cover 153, this causes the button 52 to move the cylinder 86 for lifting the piston rod 80 in the manner shown in the foregoing.

This design of button-cover 153 and actuation mechanism 18 has the advantage that the pen-type dispenser 10 can be held and activated in any orientation.

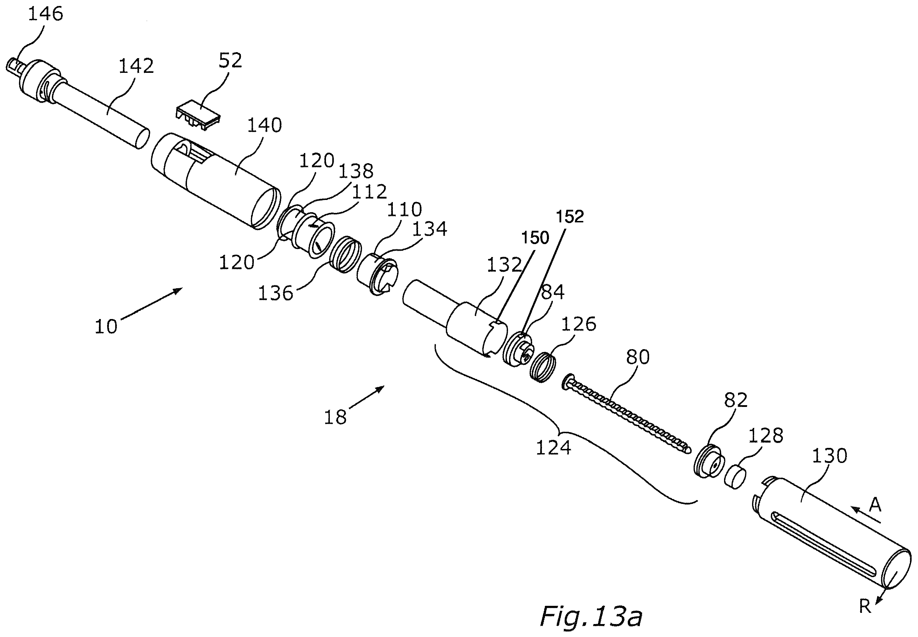

Fig. 13a shows an exploded view of components of a further kind of pen-type dispenser 10 that is configured as a side-knock to ratchet system as the material driving mechanism 18.

The dispenser 10 comprises from back to front a rear body 130 in which the piston rod 80 an indicator drum 128 and the ratchet cage 82 are arranged. The piston rod 80 is threadedly engaged with the ratchet cage 82 via its outer thread 94 that engages the inner thread 92.

A coupling 148 is formed between the rear body 130 and the ratchet cage 82. The coupling 148 forms a gear rim connection between the rear body 130 and the ratchet cage 82 such that the ratchet cage 82 cannot move relative to the rear body 130.

The ratchet cylinder 84 is arranged within an inner cylinder 132 and is configured to act as a piston rod guide as the piston rod 80 is permit to move axially along the longitudinal axis A along the passage 104 formed in the ratchet cylinder 84, but cannot rotate relative to the ratchet cylinder 84 due to the complementary shaped cross-sections of the passage 104 and of the piston rod 80.

The ratchet cylinder 84 cannot move relative to the inner cylinder 132. This is because a recess 150 formed at the inner cylinder 132 engages a projection 152 formed on an outer surface of the ratchet cage 84. The projection 152 may also be formed at a piston guide 178, which is engageable or engaged with the ratchet cylinder 84 in a manner described below.

A cage spring 126 is arranged between the ratchet cage 82 and the ratchet cylinder 84. The cage spring 126 biases the ratchet cage 82 with respect to the ratchet cylinder 84. These thereby form components of the resetting mechanism 124.

A rotary member 134 is arranged at the inner cylinder 132 and is biased relative to a rotary slide 138 via a rotary slide spring 136. On pressing the button 52, the rotary slide 138 is entrained towards the rotary member 134 and thereby biases the rotary slide spring 136. On releasing the button 52, the rotary slide spring 136 relaxes and moves the rotary slide 138 back towards the button 52.

The rotary slide 138 comprises the cams 120 that are acted on by the abutment present at the button 52 formed at an inner surface of the button 52. Advantageously, the rotary slide 138 is arranged within the main body 140.

A cartridge holder 142 which may also act as an applicator 24 can be screwed into the main body 140 via a quarter turn coupling. On reaching its end position the cartridge holder can lock into this position by means of a snap-fit type of connection formed by a nose at surface of the cartridge holder 142 facing a surface of the main body 140. In this connection it should be noted that the arrangement of the snap-fit connection can be reversed, i.e. the nose can be present at the main body etc.

The snap-fit connection is also known as a click notch system. A double start thread may be provided as the quarter turn coupling for attachment to the actuator housing.

When the cartridge holder 142 is in its locked position this directly biases the ratchet cylinder 84 into engagement with the ratchet cage 82. On removing the cartridge holder 142, the cage spring 126 relaxes axially moving the ratchet cylinder 84 out of engagement from the ratchet cage 82.

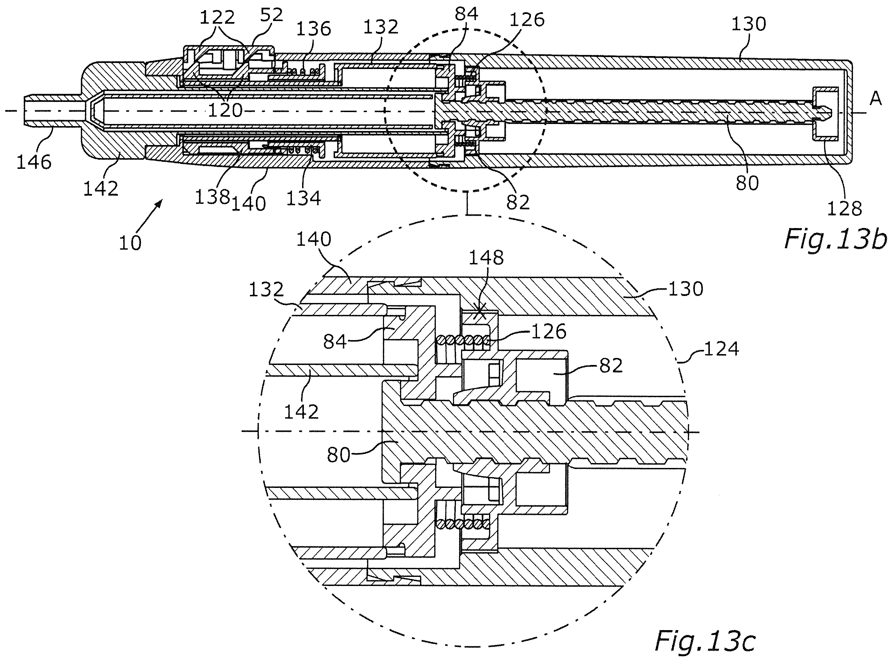

Fig. 13b and c show sectional illustrations of the pen type dispenser of Fig. 13a with the cartridge holder 142 attached at the dispenser 10.

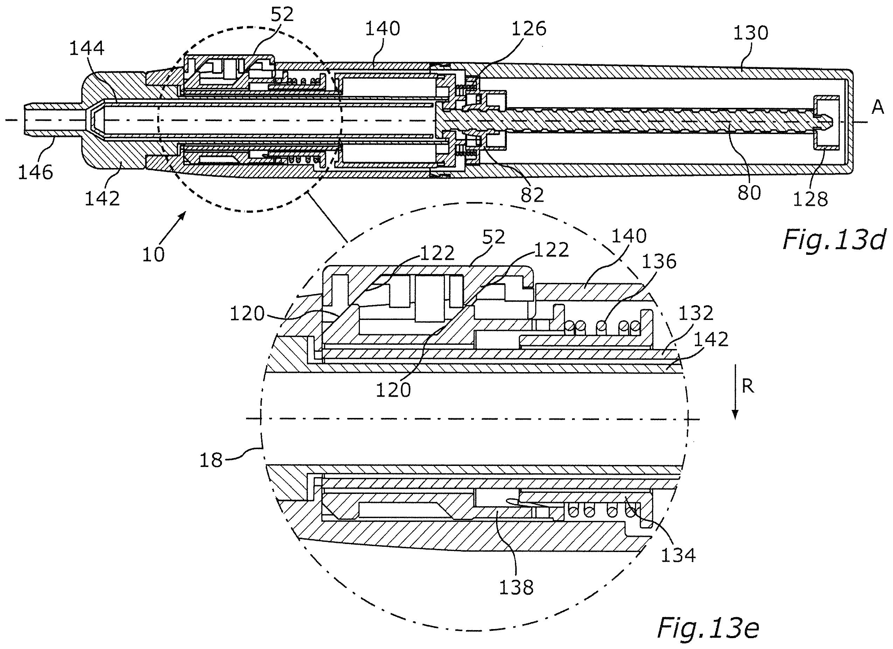

Fig. 13d and e show sectional illustrations of the pen type dispenser 10 of Fig. 13a with the cartridge holder 142 attached at the dispenser 10 and the button 52 depressed. In this way the dispenser 10 is in a pre-dispensing mode, i.e. is capable of being activated to dispense material M.

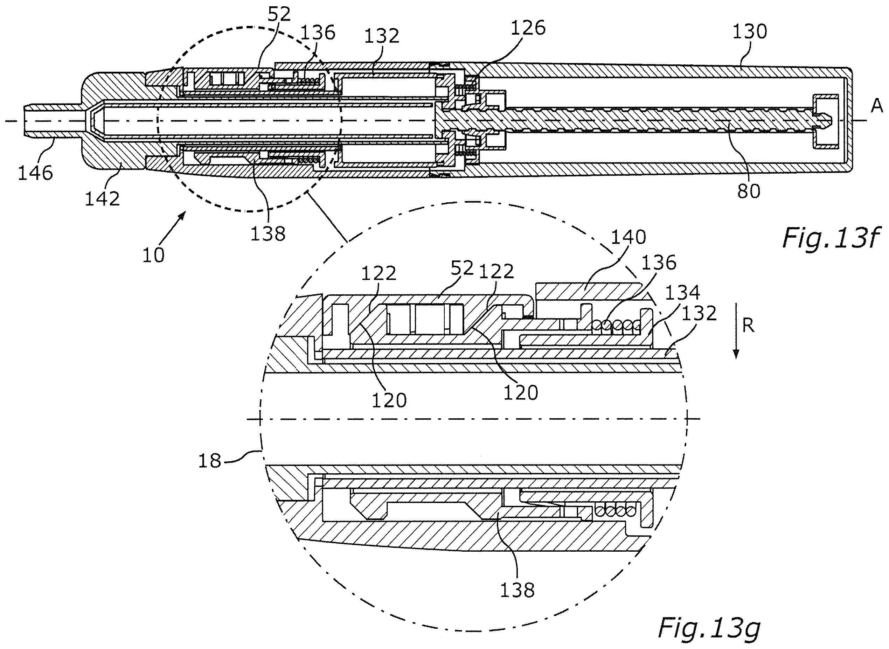

Fig. 13f and g are sectional illustrations of the pen type dispenser of Fig. 13a with the cartridge holder attached at the dispenser 10 and the button 52 pressed, i.e. the dispenser 10 is in the dispensing mode and capable of driving material M out of the dispenser 10 e.g. via the cannula (not shown).

On pressing the button 52, the abutment 122 acts on the cam 120 of the rotary slide 138 bringing about a movement of the rotary slide 138 along the longitudinal axis A. The rotary slide 138 is connected to the rotary member via one the fingers 110 acting in the channel 112. The finger 110 acting in the channel 112 will convert the linear movement into a rotational movement of the rotary member 134.

The rotary member 134 is splined to the inner cylinder 132 which thus rotates together with the rotary member 134 as this is turned. Since the inner cylinder 132 is rotationally fixed to the ratchet cylinder 84, this likewise rotates bringing about a displacement of the piston rod 80 in the axial direction along the longitudinal axis A. This lift per push of the button 52 is then related to the dose administered per push of the button 52.

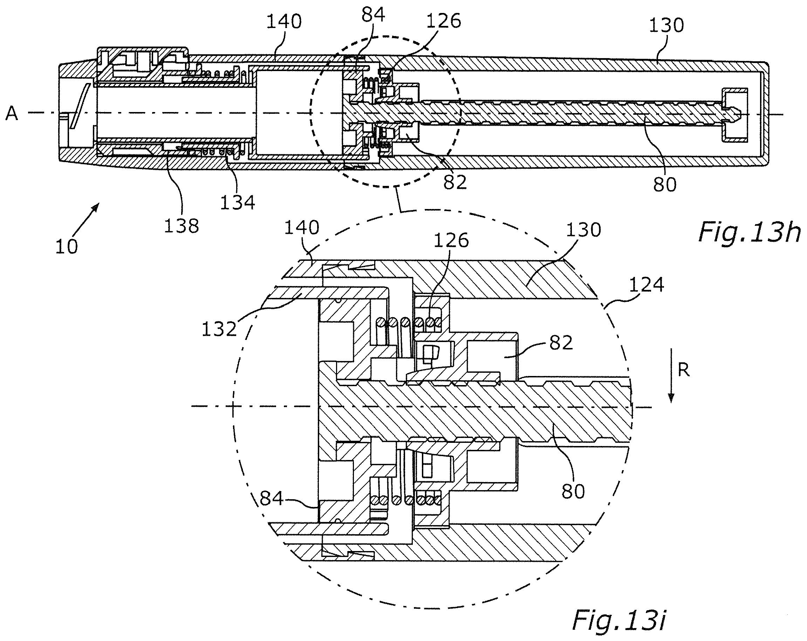

Fig. 13h and i are sectional illustrations of the pen type dispenser of Fig. 13a with the cartridge holder 142 removed from the dispenser 10.

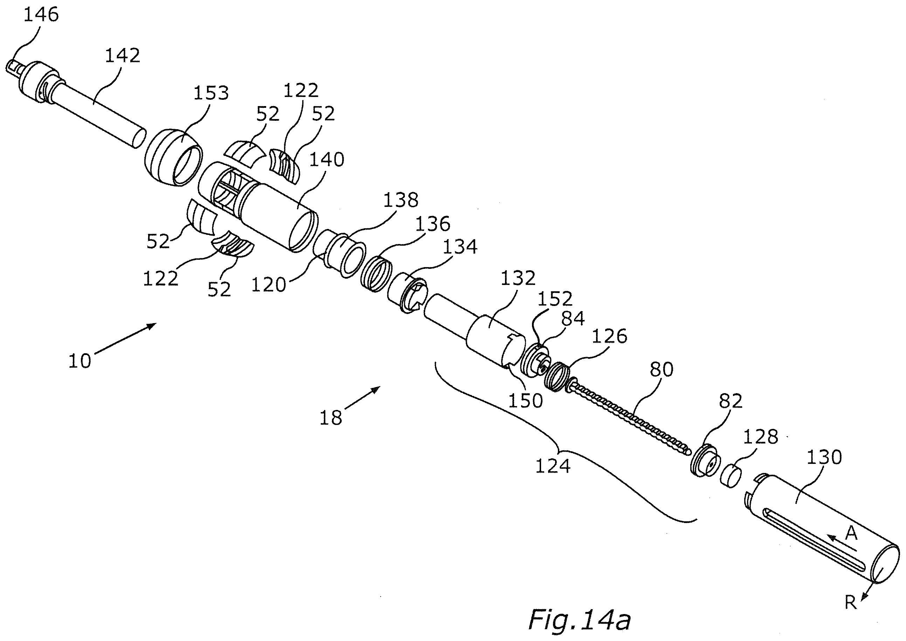

Fig. 14a shows an exploded view of components of a further kind of pen-type dispenser 10 that is configured as a radial elastic side-knock to ratchet system as the material driving mechanism 18.

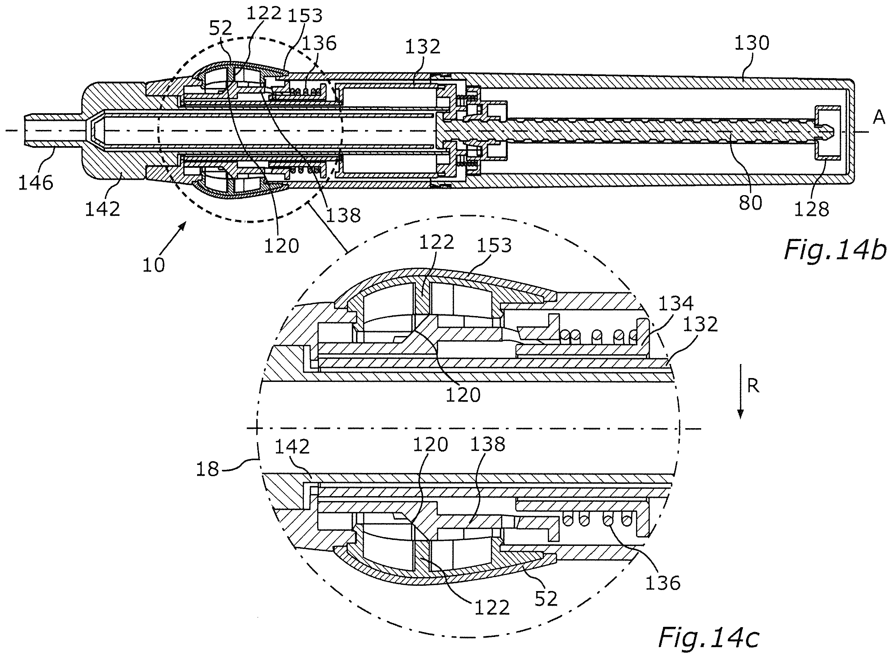

Fig. 14b shows a sectional view of the pen-type dispenser of Fig. 14a with the cartridge holder 142 attached and the button 52 depressed. Fig. 14c shows an enlarged view of Fig. 14b.The abutment 122 is not in engagement with the cam 120 of the rotary slide 138 in this position.

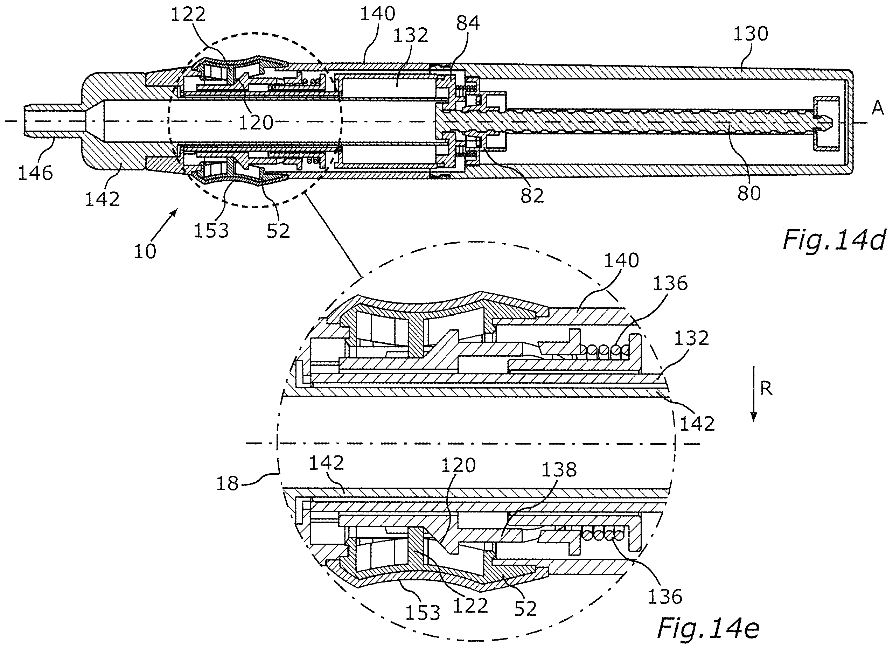

Figs. 14d and e show sectional views of the pen-type dispenser of Fig. 14a. In these drawings one can see that the button-cover 153 and the related button 52 has been pressed forcing the abutment 122 to move in the radial direction R and due to the complementary shaped inclined surfaces of the abutment 122 and the cam 120, the radial movement of the abutment 122 causes a linear movement of the rotary slide 138.

Hence a radial activation of the button 52 is configured to bring about an axial movement of the piston rod 80. This movement is effected by means of only mechanical components.

The button-cover 153 is an annular shaped button radially extending about the main body 140. The button 52 is more elastic than the main body 140.

The button-cover 153 extends around the button 52 having the abutment 122 facing radially inwardly towards the rotary slide 138 having the cam 120 that is engaged by the button 52.

On pressing the button-cover 153, the button 52 engages the rotary slide 138 causing this to slide backwards along the longitudinal axis A biasing the spring 136.

In contrast to the design shown in Fig. 13 in the dispenser 10 of Fig. 14 the button-cover and related button 52 extends circumferentially around the main body 140 and hence the dispenser 10 can be held in any orientation and the button 52 can still be pressed by a user of the dispenser 10. This is highlighted in Fig. 14e where the pressing of the elastic button-cover 153 causes a deflection of the button 52 at the top and bottom in the views shown.

For both of the pen-type dispensers shown in Figs. 13 and 14, the resetting mechanism 124 works in the same manner. Once the cartridge holder 142 is removed as indicated in Fig. 13h and i, the cage spring 126 will relax releasing the engagement between the ratchet cylinder 84 and the ratchet cage 82.

And on turning the main body 140 relative to the rear body 130, the piston rod 80 can be rewinded into its starting position due to the coupling between the ratchet cage 82 and the rear body 130.

On reattaching the cartridge holder 142 this will bias the cage spring 126 and the ratchet cage 82 and the ratchet cylinder 84 once again engage one another so that the piston rod 80 can be moved during the dispensing process.

The cartridge holder 142 can either be configured to hold a separate cartridge 144 or be formed as the cartridge. The cartridge holder 142 is releasably held at an actuator housing formed by the main body 140 and the rear body 130.

The piston rod 80 is axially moveable towards and into the cartridge respectively the cartridge holder 142.

At least one of the ratchet cage 82 and the ratchet cylinder 84 comprises one or more projections or teeth 96 that engage one or more recesses 102 present at at least one of the ratchet cage 82 and the ratchet cylinder 84.

The dispenser 10 further comprises a rotatable body or member 134. A rotation of the rotatable body 134 is brought about by pressing an actuator, i.e. the button 52 of said dispenser 10.

The cartridge holder 142 is configured to receive a cannula (not shown) at a cannula attachment 146.

The cartridge holder 142 is configured to urge the resetting mechanism 124 into an engaged state where the piston rod 80 cannot rotate relative to the housing and on removal of the cartridge holder 142 the contact between the cartridge holder 142 and the resetting mechanism 124 is released to enable a rotation of the piston rod 80 and hence a resetting of the piston rod into its original starting position.

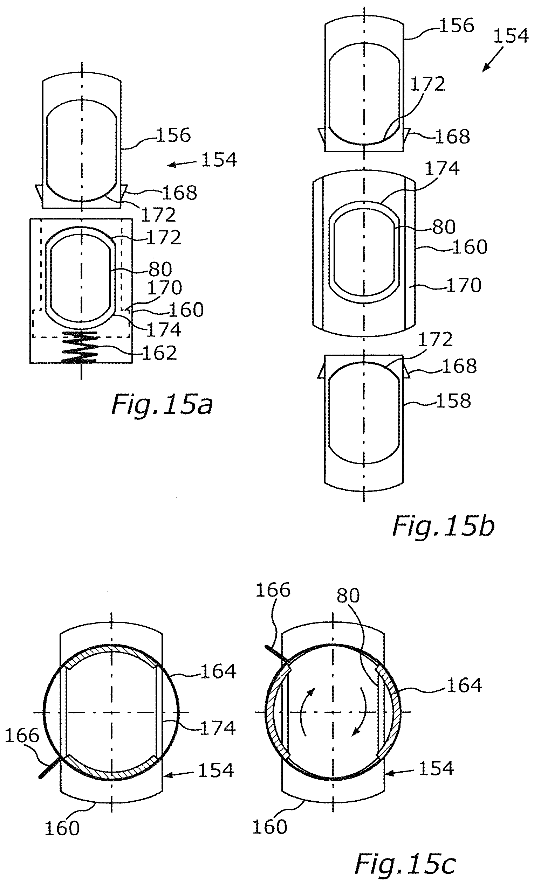

Fig. 15a to c show various views of different kinds of a clamping mechanism 154 for clamping the piston rod 80.

Fig. 15a shows a clamping mechanism 154 comprising a fixed cage element 160 in which an upper cage element 156 is slideably arranged in a guide slot 170. The upper cage element 156 is biased with respect to the piston rod 80 via a spring 162. On pressing the upper cage element 156 towards the fixed cage element 160 the engagement of the piston rod 80 via the clamping mechanism 154 can be released to permit a resetting of the piston rod 80 into its original position for reloading the new cartridge 56 into the dispenser 10.

The upper cage element 156 comprises two guide cams 168 which are guided in the guide slot 170 and that can abut an edge of the guide slot to prevent a removal of the upper cage element 156 from the fixed cage element 160.

In the example shown the guide cams 168 have a triangular shape, but it is possible to employ different shapes. The triangular shape of the guide cam 168 enables a simpler installation within the fixed cage element 160 in contrast to its removal.

Each of the fixed cage element 160 and the upper cage element 156 comprise an abutment surface 172 that is configured to clampingly engage the piston rod 80 in the clamped position and to be disengaged from the piston rod in the unclamped position.

It should be noted that the upper cage element 156 can have a part that is present in the form of a reset button and that can be engaged from the outside of the housing 12 of the dispenser 10.

It should further be noted that the fixed cage element 160 comprises an elongate slot 174 that is shaped complementary to the outer circumference of the non-circular piston rod 80. When the clamp of the clamping mechanism 154 is released the piston rod can be axially moved relative to the fixed cage element. When the clamping mechanism is engaged the piston rod 80 is clamped by the moveable part of the clamping mechanism 154.

Fig. 15b shows a further design of the clamping mechanism 154 that comprises the upper cage 156, a lower cage element 158 and the fixed cage element 160. Such a clamping mechanism can symmetrically clamp the piston rod 80.

It should be noted that the lower cage element 158 can be formed similar to and preferably identical to the upper cage element 156 and can be arranged within the fixed cage element 160 in a manner similar to the example shown in Fig. 15a. Also in this case the lower cage element 158 and the upper cage element 156 are slideably arranged within the fixed cage element 160.

Fig. 15c shows a further type of clamping mechanism 154 that comprises a rotatable cage element 164 arranged within the fixed cage element 160. Part of the clamping mechanism 154, i.e. the rotatable cage element 164 can be rotated relative to the remaining part of the clamping mechanism 154, i.e. the fixed cage element 160.

An angle of rotation can be selected in the range of 30 to 120°, preferably in the range of 45 to 105° relative to the remaining parts of the clamping mechanism 154 for resetting. In the example shown the angle of rotation is selected as 90°.

The rotation of the rotatable cage element 164 relative to the fixed cage element 160 can be brought about by moving a lever 166 relative to the fixed cage element 160. In the clamped position the rotatable cage element 164 clamps the piston rod 80 to the fixed cage element 160 and in the unclamped position the engagement of the piston rod 80 via the rotatable cage element 164 is released to permit a movement of the non-circular piston rod 80 relative to the elongate slot of the fixed cage element 160.

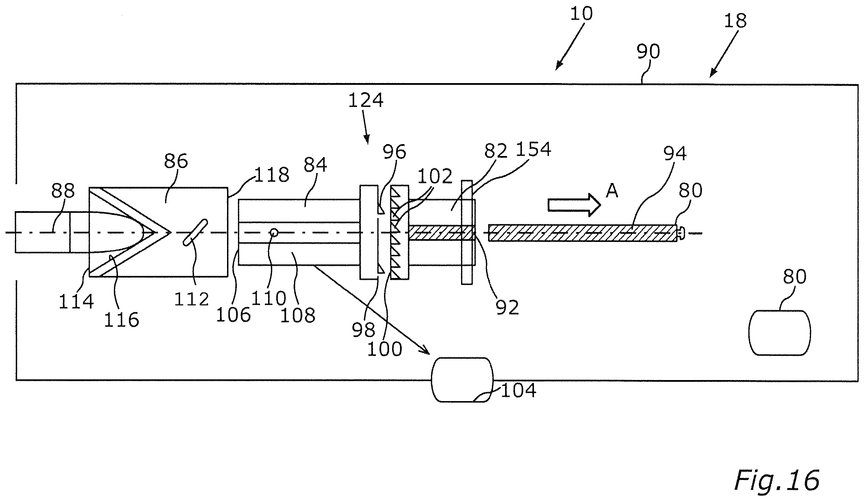

Fig. 16 shows a view of a kind of pen-type dispenser 10 as described in connection with Fig. 10, i.e. the pen type dispenser 10 comprises a so-called body-knock to ratchet system as the material driving mechanism 18. One of the kinds of clamping mechanisms 154 as described in connection with one of Figs. 15a to c can be arranged at the ratchet cage 82 as indicated in the drawings.

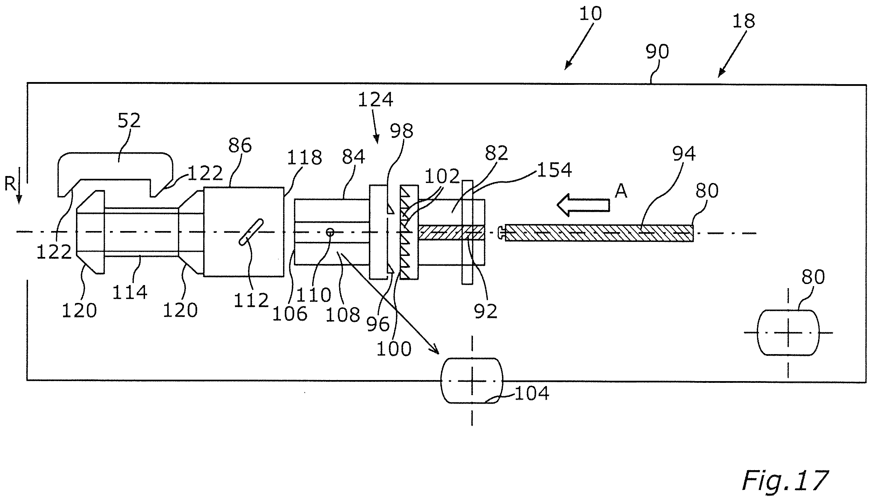

Fig. 17 shows a view of a kind of pen-type dispenser 10 as described in connection with Fig. 11. The pen-type dispenser 10 comprises a so-called side-knock to ratchet system as the material driving mechanism 18. The clamping mechanism 154 is arranged within the dispenser 10.

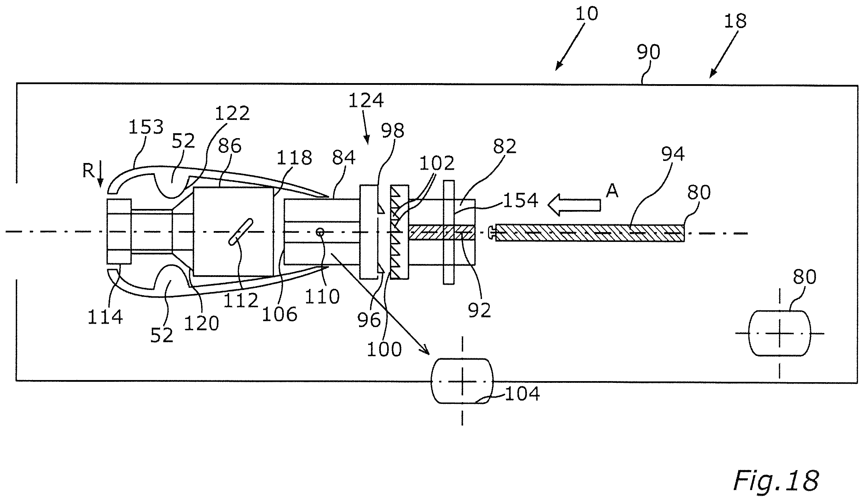

Fig. 18 shows a view of a kind of pen-type dispenser 10 as described in connection with Fig. 12. The pen-type dispenser 10 comprises a so-called radial elastic side-knock to ratchet-system as the actuation mechanism 18. The dispenser 10 has the clamping mechanism 154 arranged therein as part of the resetting mechanism 124.

It should be noted that any of the kinds of clamping mechanisms described in the foregoing can be arranged with any kind of pen-type dispenser 10 described herein and can be used to clamp the piston rod 80 during dose dispensing and can be used to release the clamp of the piston rod 80 during resetting.

During resetting the pen-type dispenser 10 may be held in a vertical position such that the piston rod 80 can drop back into its original position due to gravity. Additionally or alternatively, the piston rod 80 may be biased relative to the other components of the pen-type dispenser with the aid of a spring (not shown) that once the clamp on the piston rod 80 via the clamping mechanism 154 is released can automatically move the piston rod 80 into its original position.

It should further be noted that regardless of the type of clamping mechanism 154 used in the examples shown in Figs. 16 to 18, the clamping mechanism 154 can be actuated from the outside of the housing 12, either by pressing one of the upper cage element 156, the lower cage element 158 or rotating the rotatable cage element 164 via the lever 166.

The engagement of the respective moveable element of the clamping mechanism 154, i.e. one of the upper cage element 156, the lower cage element 158 and the rotatable cage element 164, with the fixed cage element 160 can be assisted by a respective biasing member, e.g. one or more springs 162.

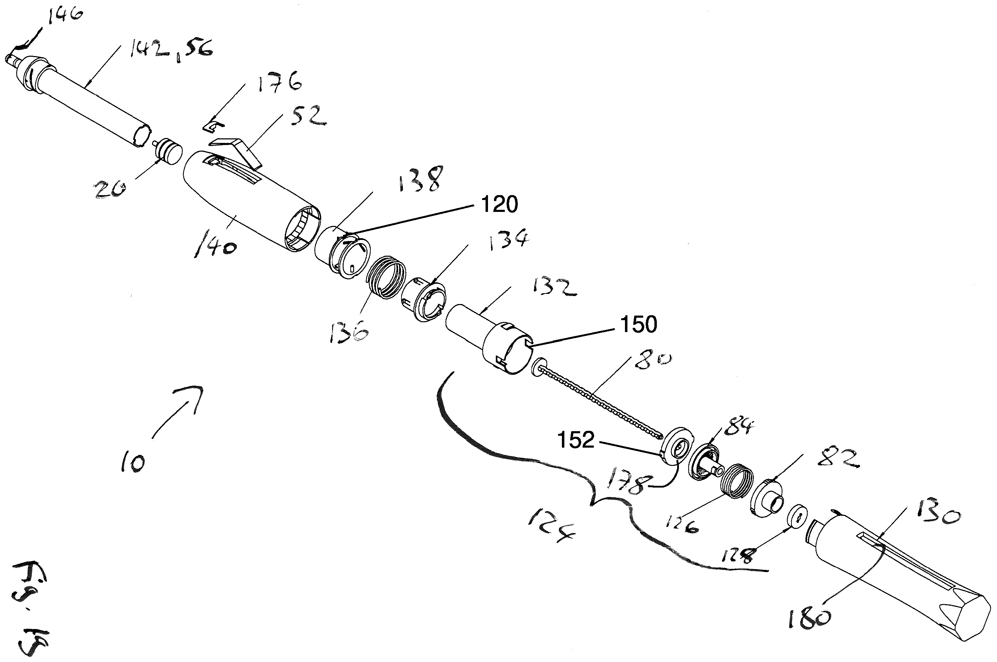

Fig. 19 shows a view of components of a further type of pen-type dispenser 10. The pen-type dispenser comprises the cartridge holder 142 that may have a cartridge integrally formed therein or that may hold a removable cartridge 56, this acts as a tank for holding the dental 1K material within the pen type dispenser 10.

The plunger 20 acts on the dental material stored in the cartridge 56 respectively the cartridge holder 142 on dispensing and helps in releasing/pushing out the dental material in operation of the pen-type dispenser 10.

The main body 140 supports components of the dispensing mechanism, i.e. the cartridge holder 142, respectively the cartridge 56, a push button support 176, the button 52, the rotary slide 138, the rotary slide spring 136, the rotary member 134 and the inner cylinder 132 of the pen-type dispenser 10 and acts as an outer shell.

The push button support 176 holds, i.e. supports the push button 52 in use. In this connection it should be noted that the push button support 176 is shown as a separate component in the drawing of Fig. 19, but can likewise be formed integrally together with the main body 140.

On pressing the button 52, i.e. the angled hinge like button 52, the dispensing is started. The pressing of the button 52 brings about a linear displacement of components of the dispenser 10, with the rotary slide 138 converting the linear motion of the button 52 into rotary motion. However, upon pressing the button 52, the rotary slide 138 also moves linearly in axial direction and may hereinafter also be referred to as slide 138.

Linear movement of the slide 138 by the activator 50 or button 52 is achieved by an end of the button 52 not supported at the main body 140 or the push button support 176, i.e. the opposite free end of the button 52 engaging a cam 120 provided at the slide 138. A linear movement of the slide 138 can also be achieved in a manner as described with regard to the designs shown in Figs. 11 to 14 and 17 to 18.

The rotary slide spring 136 supports in biasing the button 52 back towards the push button support 176. In fact, the rotary slide spring 136 or shortly the slide spring 136 biases the slide 138 in axial direction towards the proximal end 34 of the dispenser 10 and a movement of the slide 138 towards the proximal end 34 of the dispenser urges the button 52 back into its initial position, ready for further activation. In other words, the slide spring 136 also acts as a resetting spring 214 biasing the dispense activator 50 from its operated or activated position into its non-operated or non-activated position

The rotary member 134, the inner cylinder 132, the piston rod 80 and the piston guide 178 transfer the rotary motion into a setting of the dose to be dispensed.

The ratchet cylinder 84 has a connection with the piston rod 80 and converts by means of the ratchet cage 82 the rotary motion into linear motion of the piston rod 80 for dispensing the previously set dose. In this connection, it is noted that unlike the previous designs, the piston rod 80 is in screw connection or thread engagement with the ratchet cylinder 84 instead of the ratchet cage 82, as will be described in more detail below.

The ratchet spring 126 supports in releasing the ratchet cylinder 84 and the ratchet cage 82 (also known as a ratchet support) and in biasing these back into their original position. The ratchet cage 82 when being engaged with the ratchet cylinder 84 allows for a rotational movement of the ratchet cylinder 84 and the piston rod 80 in one direction and blocks the rotary motion of ratchet cylinder 84 in the opposite direction. Furthermore, the ratchet cylinder 84 and the ratchet cage 82 can also be configured in a manner that allows no rotation in any direction if the ratchet cylinder 84 and the ratchet cage 82 are engaged, whereas the ratchet cylinder 84 and the ratchet cage 82 may freely rotate relative to each other if the ratchet cylinder 84 and the ratchet cage 82 are disengaged by means of the ratchet spring 126. Engagement of the ratchet cylinder 84 and the ratchet cage 82 is achieveable by axial compression of the ratchet spring 126, for example if a cartridge holder 142 is inserted into the dispenser 10.

The indicator drum 128 indicates the remaining amount of adhesive/fluid inside the cartridge holder 142 respectively the cartridge 56.

The rear body 130 supports the resetting mechanism 124 (i.e. the ratchet cylinder 84, the ratchet spring 126 and the ratchet cage 82) of the pen 10 and acts as an outer protective shell for the resetting mechanism 124.

The process of dispensing via the dispenser 10 is started by applying finger pressure on the push button 52 and pushing the push button 52 inward, the push button 52 is connected at both ends, one end with main body 140, e.g. via the push button support, and other end with the rotary slide 138 enabling rotary slide/circular motion at the connection's.

The pressure applied expands the push button 52 by deflecting it at the hinge into a longer shape linearly and pushes the rotary slide 138, the rotary slide 138 slides within the main body 140 and has a rotary cam slot connection with the rotary member 134. The sliding movement of the rotary slide 138 is converted into a rotary/angular movement of the rotary member 134 via a rotary cam slot connection. The angular movement is transferred to the inner cylinder 132 through a toothed connection. It should be noted that similar mechanisms have been described in the foregoing in connection with the further types of pen-type dispensers 10 shown herein.

The piston guide 178 has a radially fixed and axially sliding slotted connection with the inner cylinder 132, the piston guide 178 further receives the angular movement from the inner cylinder 132 through a radially fixed connection and transfers the same to the piston rod 80 through a slotted connection. By means of example, the angular movement may be transferred from the inner cylinder 132 onto the piston guide 178 using a form fit interaction between a projection 152 provided at the piston guide 178 and a recess 150 present at the inner cylinder 132. Furthermore, the piston rod 80 has a slotted connection with the piston guide 178 which enables the linear movement through the inner cylinder 132 and the rotary movement with the inner cylinder 132.

The piston rod 80 has a slotted connection with the piston guide 178 which enables the linear movement through the inner cylinder 132 and the rotary movement with the inner cylinder 132. In particular, the piston guide 178 comprises a slot that is shaped complementary to the outer circumference of the non-circular piston rod 80. This allows for the piston rod 80 to be rotationally fixed with regard to the piston guide 178, i.e. the piston rod 80 is rotated together with the piston guide 178, in particular which is rotated together with the inner cylinder 132.

As mentioned above, the ratchet cylinder 84 is connected to the piston rod 80 through a screw connection, the angular movement received by the piston rod 80 is converted into the linear motion through the screw connection. The ratchet cylinder 84 is connected to the ratchet cage 82 via a toothed connection, such as is described in the foregoing, and is also free to rotate independently when the tooth is released. The ratchet cage 82 has a fixed connection with the rear body 130. In this context, it is noted that a rotational movement of the piston rod 80 is transformed into a linear axial movement if the ratchet cylinder 84 is engaged with the ratchet cage 82, i.e. if the ratchet cylinder 84 cannot rotate relative to the ratchet cage 82. However, in the case of the ratchet cylinder 84 being engaged with the ratchet cage 82, the piston guide 178 may rotate relative to the ratchet cylinder 84, in particular in a slipping manner.

The indicator drum 128 is snap fitted with the piston rod 80 and moves along with the piston rod 80. The linear motion of the piston rod 80 pushes the adhesive/fluid, i.e. the 1 K material, out of the cartridge holder 142 respectively the cartridge 56 with the aid of the plunger 20. The volume of remaining adhesive/fluid in the pen-type dispenser 10 is indicated by the indicator drum 128 through a window 180 in the form of a cut-out on the rear body 130. In this way the dispenser 10 comprises a filling level indicator.

The loaded spring pressure of the rotary slide spring 136 ensures that the push button 52 returns back to its original position once the pressure on the push button 52 is released.

Replacement of the cartridge holder 142 respectively of the cartridge 56 and retracting of the piston rod 80 to its original position is established by the resetting mechanism 124.

Once the cartridge holder 142 respectively the cartridge 56 is empty, the piston rod 80 is at the front-end position of the cartridge holder 142 respectively of the cartridge 56. The cartridge holder 142 respectively the cartridge 56 is fixed at the main body 140 via a thread connection and the cartridge holder 142 respectively the cartridge 56 exerts the pressure on the piston guide 178 and the ratchet cylinder 84 by compressing the ratchet spring 126 and holding the ratchet cylinder 84 in the locked position through the toothed connection with the ratchet cage 82.

Once the used cartridge holder 142 respectively the used cartridge 56 is removed the pressure is released making the ratchet cylinder 84 free from its locked position through the expansion of the ratchet spring 126, hence allowing the ratchet cylinder 84 to freely rotate. When the new cartridge holder 142 respectively the new cartridge 56 is replaced the linear pressure is exerted on the piston rod 80 causing the ratchet cylinder 84 to rotate and retract the piston rod 80 to is original position.

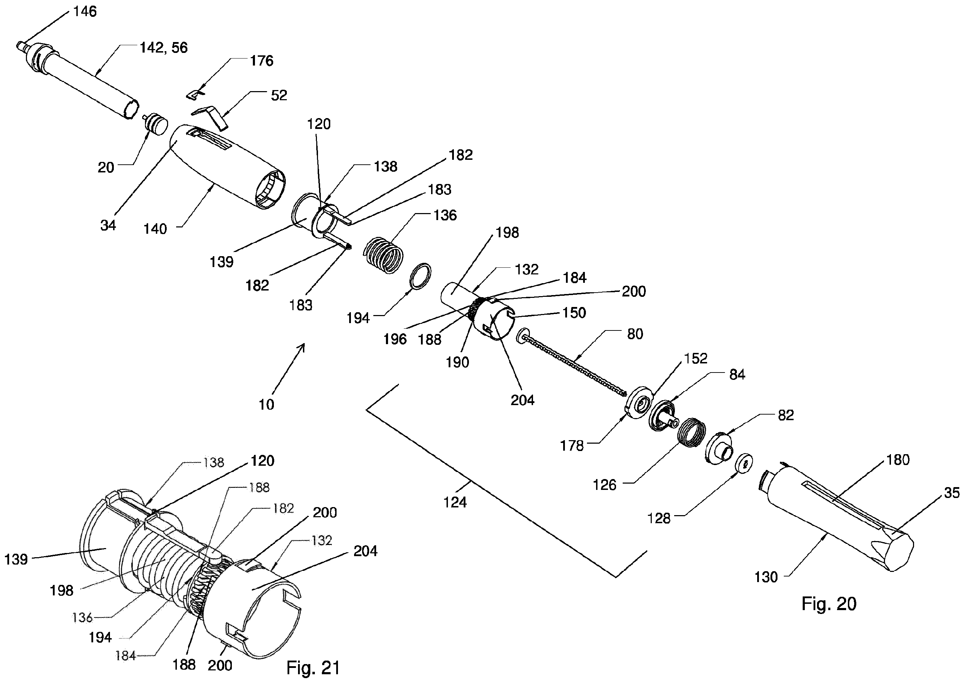

In the following, a working principle by eliminating the rotary member or rotatable body 134 and connecting the rotary slide 138 and inner cylinder 132 is described with regard to Figs. 20 to 23. This allows for an even more compact design of the dispenser 10. In this context, the dispenser 10 shown in Fig. 20 basically corresponds to the dispenser 10 shown in Fig. 19, except that interaction between the slide 138 and the inner cylinder 132 is accomplished without the rotatable body 134.

Unlike the rotary slide 138 described with regard to the previous designs, the rotary slide 138 of this design does not comprise a channel 112 or finger 110 to turn the inner cylinder 132. Instead, as can be seen best from Fig. 20 and 21, the slide 138 comprises for the same purpose two cantilever beams 182 axially extending in a distal direction from a cylindrical sleeve body 139 of the slide 138. The cantilever beams 182 may be spring elastically deflectable, in particular in radial direction with regard to the longitudinal axis A.

In this connection, it is to be noted that the rotary slide 138 can also comprise only one cantilever beam 182 or more than two cantilever beams 182, like three, four or more cantilever beams 182.

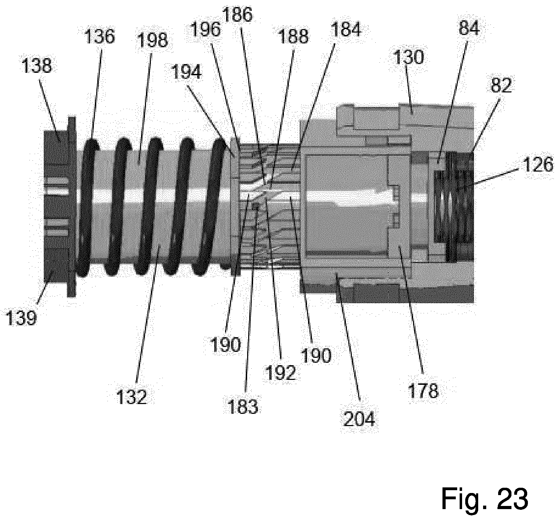

Each of the cantilever beams 182 comprises at its respective free end a radially inwardly projecting nib 183. The nibs 183 are configured to interact with a cam 184 forming a saw tooth pattern in circumferential direction of an outer surface of the inner cylinder 132. In particular, each one of the nibs 183 is configured to interact with an inclined surface 186 of a tooth 188 of the saw tooth cam 184, best seen in Fig. 23. Note that in Fig. 23 the cantilever beam 182 is not shown for illustrative purposes.

An axial movement of the slide 138 in the distal direction brings each nib 183 of the cantilever beams 182 into contact with the inclined surface 186 of one of the teeth 188 of the saw tooth cam 184. Further axial movement of the slide 138 in the distal direction urges the nibs 138 against the inclined surface 186 of the tooth 188 thereby exerting an axial force onto the inclined surface 186 causing an evasive rotary movement of the inner cylinder 132. This ultimately results in a rotational and translational movement of the piston rod 80 in a manner as described above and discharges the material out of the cartridge holder 142 respectively the cartridge 56.

Furthermore, as can be seen best in Fig. 23, each tooth 188 of the saw tooth cam 184 is provided with a radially elevated rib 190 extending in an axial direction and being perforated by an inclined trench 192 having the same inclination as the inclined tooth 188. This trench 192 allows the nib 183 to follow the inclined surface 186 of the tooth 188 as the slide 138 is axially moved in the distal direction and the inner cylinder 132 is rotated. However, after this rotation, the rib 190 prevents the nib 183 from engaging again with the same tooth after the slide 138 has been axially retracted backwards in the proximal direction into its initial position by means of the slide spring 136.

The slide spring 136 is arranged axially between the sleeve body 139 of the slide 138 and a washer 194 acting as a spring stopper. The washer 194 is seated at a shoulder 196 formed by the saw tooth cam 184. The washer 194 may also be attached or attachable to the main body 140.

Furthermore, the slide spring 136 is radially arranged between the cantilever beams 182 and an outer wall 198 of the inner cylinder 132 stepped radially inwardly with regard to the saw tooth cam 184 thereby forming the shoulder 196 on the saw tooth cam 184. This allows for a compact design of the dispenser 10.

As can be seen for example from Figs. 21 to 23, the slide spring 136 bears against the sleeve body 139 and the washer 194 and biases the rotary slide 138 towards the proximal end 34 of the dispenser 10, which also ensures that the push button 52 returns back to its original position once the pressure on the push button 52 is released.

During axial movement of the slide 138 in distal direction, i.e. during activation of the activator 50 or push button 52, the slide spring 136 is compressed. After releasing the activator 50 or push button 52, the slide spring 136 relaxes and pushes the slide 138 back in the distal direction into the initial position in which the nibs 183 are disengaged from the saw tooth cam 184 and ready for a further engagement with the next tooth 188 of the saw tooth cam 184.

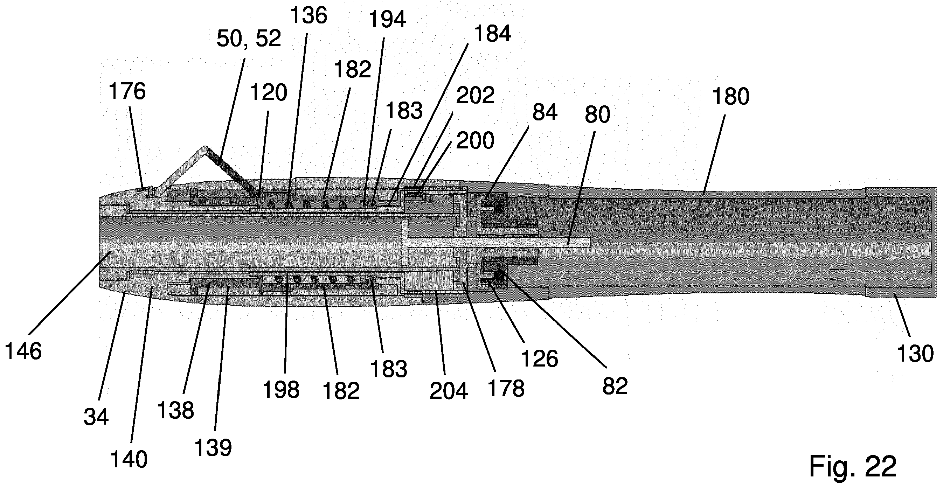

It is noted that a reverse rotation of the inner cylinder 132 is hindered by at least one spring elastically deflectable locking element 200 radially protruding from the inner cylinder 132 and interacting with a circular saw tooth cam 202 provided at an inner circumference of the main body 140 (see for example Fig. 22). During rotation of the inner cylinder 132 in the free rotation direction, the locking element 200 passes by at least one tooth of the circular saw tooth cam 202 and is deflected radially inwardly. However, in a direction opposite the free rotation direction, the locking element 200 bears against a tooth of the circular saw tooth cam 202 thereby preventing a reverse rotation of the inner cylinder 132. It is noted that this mechanism also applies to the previously described designs.

In the embodiments shown, the locking element 200 is provided at a basis 204 of the inner cylinder 132 stepped radially outwardly with regard to the inner wall 198, as best seen in Fig. 21.

Next a discharge process will be described. The process is started by applying finger pressure on the push button 52 and pushing the push button 52 inward, the push button 52 is connected at both ends, one end with main body 140 and the other end with the slide 138 enabling rotary/circular motion e.g. at the connection's, the pressure applied expands the push button 52 linearly and pushes the rotary slide 138. The rotary slide 138 slides relative to the main body 140 and leads to a rotation of the inner cylinder 132 via the rotary cam slot connection formed by the finger 110 / channel 112 interaction (Figs. 10 to 14 and 16 to 19) or by an engagement of the nibs 183 with the teeth 188 of the saw tooth cam 184 (Figs. 20 to 23).

The sliding movement of rotary slide 138 is converted into a rotary/angular movement of inner cylinder 132. The piston guide 178 has a radially fixed and axially sliding slotted connection with the inner cylinder 132.

The piston guide 178 further receives the angular movement from the inner cylinder 132 through radially fixed connection and transfers the same to the piston rod 80 through a slotted connection. The piston rod 80 has a slotted connection with the inner cylinder 132 which enables the linear movement through the inner cylinder 132 and rotary movement with the inner cylinder 132. The ratchet cylinder 84 is connected to the piston rod 80 through a screw connection, i.e. the threaded connection, the angular movement received by the piston rod 80 is converted in the linear motion through the screw connection. The ratchet cylinder 84 is connected to the ratchet cage 82 via a toothed connection and also free to rotate independently when the tooth is released.

The ratchet cage 82 has a fixed connection with the rear body 130, the indicator drum 128 is snap fitted with the piston rod 80 and moves along with the piston rod 80, the linear motion of the piston rod 80 pushes the adhesive/fluid, like the 1 K material, out of the cartridge holder 142 respectively the cartridge 56 with the aid of the plunger 20. The remaining adhesive/fluid is indicated by the indicator drum 128 through the window 180 or cut-out on the rear body 130, the loaded spring pressure of the rotary slide spring 136 ensures that the push button 52 returns back to its original position once the pressure on the push button 52 is released.

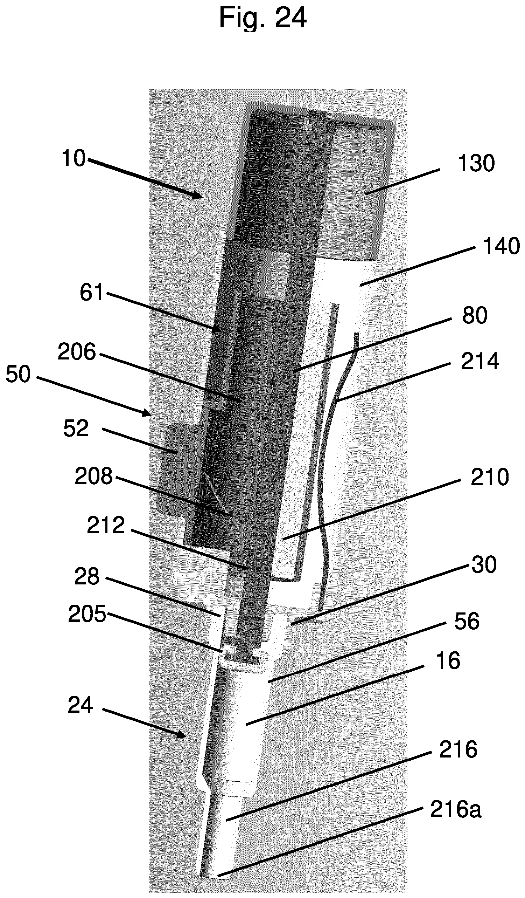

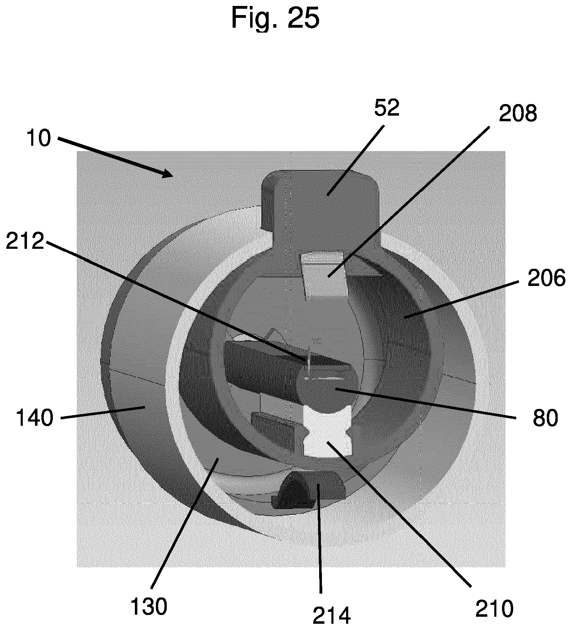

In the following, the structural configuration of another exemplary embodiment of a multi-use dispenser 10 in accordance with the present invention will be described with reference to Figs. 24 and 25. Its function will be described further below.

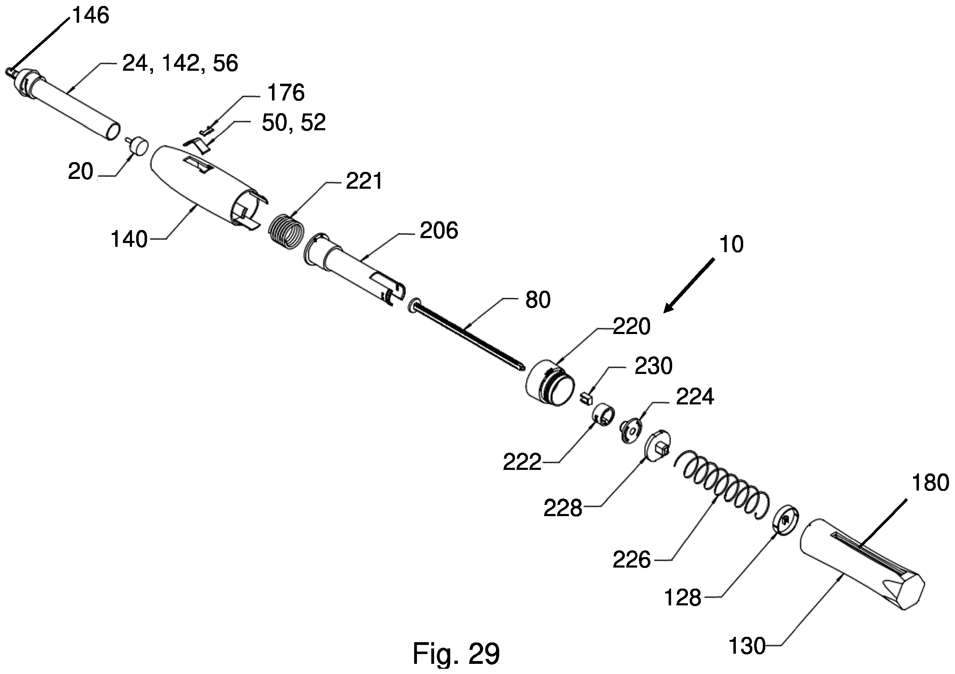

As can be seen in particular in Fig. 24 the illustrated multi-use dispenser 10 comprises a main body 140 forming part of a housing 12 of the multi-use dispenser 10. The main body 140 encloses a dispense mechanism 61. Said dispense mechanism 61 comprises a piston rod 80 axially movable with respect to the main body 140 in a proximal direction (in FIG. 24 downwards in the direction of an applicator 24 (described later). The piston rod 80 is provided with a piston pusher 205 for pushing a piston 20 or plunger 20 (Fig. 29) of the applicator 24. The main body 140 comprises a connection means 30 configured to couple a connection means 28 of the applicator 24 to the multi-use dispenser 10 in a releasable manner such that a proximal movement of the piston rod 80 results in a proximal dispense movement of the piston 20 (not illustrated in Fig. 24) of the applicator 24 for dispense. In particular, the connection means 30 are keyed connection means allowing only the coupling of applicators 24 with matching keyed connection means 28 to the multi-use dispenser 10. Preferably, the coupling between the multi-use dispenser 10 and the applicator 24 is formed by Luer-Lock or bayonet connection means.

The dispense mechanism 61 of the multi-use dispenser 10 comprises further a dispense activator 50. Here, the dispense activator 50 comprises a dispense knob 52 or button 52 to be operated by a user in a direction perpendicular to the axial dispense direction (also known as longitudinal axis) of the piston rod 80, and an activator sleeve 206 surrounding the piston rod 80 at least partly.

The dispense activator 50 is coupled operatively to the piston rod 80 via an activation spring member 208 and a brake element 210.

The activation spring member 208 is fixed with a first end thereof to the dispense activator 50 and is in engagement with a toothed configuration 212 of the piston rod 80 with a second end thereof (see Fig. 24). Said toothed configuration 212 is formed by radially extending teeth provided on a certain circumferential section of the piston rod 80 (see Fig. 25). The remaining circumference of the piston rod 80 comprises no such teeth but an in particular smooth surface and an in particular circular cross section. The brake element 210 is coupled fixedly to the activator sleeve 206 and positioned between the activator sleeve 206 and the piston rod 80 in the radial direction of the piston rod 80.

Furthermore, a resetting spring 214 is preferred positioned opposite the dispense knob 52 and configured to bias the dispense activator 50 from its operated position into its non-operated position illustrated in Figs. 24 and 25). However, also other positions for the resetting spring 214 are possible, as long as it is configured to bias the dispense activator 50 in the described manner.

Finally, the rear body 130 is preferred connected fixedly to the rear part of the piston rod 80 and configured to move together with the piston rod 80 along the main body 140 together with the piston rod 80. The rear body 130 is provided within the main body 140 in such a manner that it supports the rear part of the piston rod 80 in its orientation with respect to the main body 140, such that the longitudinal axis of the piston rod 80 is always aligned with the longitudinal axis A of the main body 140.

As an alternative to the described rear body 130, a rear-cap (not illustrated) can be provided to close the distal end of the main-body 140. In such a configuration, the piston rod 80 can extend through a through-hole within the rear-cap to be supported. Moreover, the piston rod 80 can be connected at its distal end to a moulded element, in particular in the form of a gripping element for the user.

In the following, the function of the illustrated multi-use dispenser 10 will be described.

At first, the multi-use dispenser 10 is in the non-operated state illustrated in Fig. 24 and a matching applicator 24 is coupled via the keyed connection means 28 and 30 to the multi-use dispenser 10. In this state, the dispense activator 50 is biased by the resetting spring 214 in its non-operated position, i.e. to the left in Fig. 24 or to the top in Fig. 25. Consequently, the brake element 210 is squeezed between the activator sleeve 206 and the piston rod 80 fixing the piston rod 80 against axial movement thereof relative to the main body 140.

To dispense a predefined amount of substance from the applicator 24, the user pushes the dispense knob 52 inwardly against the resetting force of the resetting spring 214 and against the activation spring member 208. Thus, the activator sleeve 206 moves together with the dispense knob 52 in a direction perpendicular to the longitudinal axis of the piston rod 80 resulting in a resolving of the contact between the brake member 210 and the piston rod 80. At the same time, the activation spring member 208 abuts with its second end against the teeth of the toothed configuration 212 of the piston rod 80 and is deformed resulting in an axially directed movement of the piston rod 80 towards the applicator 24. This movement results a proximal dispense movement of the piston 20 (not illustrated in Figs. 24 and 25) of the applicator 24. The toothed configuration 212 of the piston rod 80 is in further engagement with a clicker member (not illustrated) formed at the breakthrough of the piston rod 80 through the main body 140 near the connection means 30, providing a haptic and/or acoustic feedback to a user during the dispense operation.

Upon full activation of the dispense activator 50, the piston rod 80 has moved a predefined distance along the main body 140 determined by the specific geometric configuration of the components of the dispense mechanism 61. In particular, the predefined distance traveled by the piston rod 80 upon operation of the dispense activator 50 is specified by the available movement distance of the dispense activator 50 perpendicular to the piston rod 80 and the shape of the activation spring member 208. This predefined amount predefines the amount of substance dispensed form the applicator 24 upon a single dispense operation caused by a single operation of the dispense activator 50.

After the full operation of the dispense activator 50, the user releases the dispense knob 52. Thus, the resetting spring 214 moves back the dispense activator 50 into its non-operated position resulting in the brake element 210 contacting and fixing the piston rod 80 again. At the same time, the second end of the activation spring member 208 moves along the teeth of the toothed configuration 212 for moving back into its original shape.

Now, the dispense activator 50 may be operated again for a further dispense operation or the applicator 24 is decoupled from the multi-use dispenser 10. For retracting the piston rod 80 of the multi-use dispenser 10 for usage with a second applicator 24, the dispense activator 50 is operated at least partly for resolving the contact between the brake element 210 and the piston rod 80. Then, the rear body 130 is rotated by at least 90° about the longitudinal axis of the piston rod 80 resulting due to an also rotational coupling between these two components in a rotation of the piston rod 80. This rotational movement results in a disengagement of the activation spring member 208 from the toothed configuration 212 of the piston rod 80. In this state, the user can retract the rear body 130 (or the moulded element at the piston rod's 80 distal end) together with the piston rod 80 into its original relative orientation with respect to the main body 140. This retracting movement can be supported by a further provided spring element (not illustrated), which is compressed by the proximal dispense movement of the piston rod 80. After the full retraction movement, the user turns the rear body 130 (or the moulded element) together with the piston rod 80 back into its original orientation resulting in a reengagement of the activation spring member 208 with the toothed configuration 212.

Now, a new applicator 24 can be coupled to the multi-use dispenser 10 for a further dispense operation.

Alternatively, to the above described toothed configuration 212, the piston rod 80 can comprise a thread configuration along its outer circumference, for example like the one of the designs shown in Figs. 1 to 23, being in engagement with the activation spring member 208. Such a configuration would allow a screwing retraction movement of the piston rod 80 without decoupling the activation spring member 208 from the piston rod 80.

In the following, three preferred exemplary embodiments for applicators 24 for usage with multi-use dispensers 10 in accordance with the present invention and in particular with the above described multi-use dispenser 10 are described with reference to Fig. 26 to 28. Such applicators 24 are suitable to be combined with the above described multi-use dispenser 10 to form an application set in the sense of the present invention.

Each applicator 24 comprises the cartridge or cartridge body 56 defining the reservoir 16 filled with an in particular dentistry applicable substance, such as the 1K material M. In other words, the applicator 24 forms a cartridge holder 142 storing the cartridge or the cartridge body 56. Each cartridge body 56 is connected to a dispense body 216 with a dispense opening 216a through which the substance from the corresponding reservoir 16 can be dispensed. A piston 20 is provided within and movable along the reservoir 16 to dispense the substance from the reservoir 16 upon movement in a proximal direction towards the dispense body 216 (i.e. to the left in Figs. 26 to 28). For coupling the applicators 24 in a releasable manner to the multi-use dispenser 10 each applicator 24 comprises the above referred to, in particular keyed, connection means 28. The multi-use dispenser 10 and the applicator 24 are configured such that in the coupled state the piston 20 is movable in the proximal direction by a dispense operation of the multi-use dispenser 10 and in particular by a corresponding proximal movement of the piston rod 80.

In the illustrated embodiments, each dispense body 216 comprises a distribution means 217, such as a nozzle, at, in particular around, the dispense opening 216a.

As illustrated in particular in Fig. 26, said distribution means 217 can comprise a brush configuration or simply brush 25 at, in particular around, the dispense opening 216a. In particular, said brush configuration 25 can be formed as a micro tooth-brush as illustrated in Fig. 27. However, also other implementations for the distribution means 217 like a foam configuration 23 at, in particular around, the dispense opening 216a, as for example illustrated in Fig. 28, are possible.

Preferably, as it is the case in all three illustrated embodiments, the cartridge body 56 and the dispense body 216, and in particular also the distribution means 217, of each applicator 24 is formed from a single, in particular translucent, material and, furthermore or alternatively, as single one-piece member. A translucent material is of particular relevance for applicators with primarily cosmetic dental products. For specific applications, in particular for applicators filled with light-cured sealants or fillings, the material can be only translucent for light of specific wavelengths pre-venting curing of the substance within the applicator or the material can be non-translucent.

Finally, each applicator 24 comprises a plug or cap 218 configured to be coupled releasably to the dispense body 216 to seal the dispense opening 216a, in particular before and after the dispense operation.

Now, it is referred to Fig. 29 showing an exploded view of a multi-use dispenser 10 in accordance with a further exemplary embodiment of the present invention.

Said multi-use dispenser 10 comprises a main body 140 configured to hold an applicator 24 in form of a cartridge holder 142 storing the cartridge or the cartridge body 56, a rear body 130 and a body connector 220 coupling the rear body 130 to the main body 140. A reservoir 16 within the cartridge body 56 of the applicator 24,32,56 holds a piston 20 supporting the material(s) within the cartridge body 56 and assisting the dispense operation of the materials from the reservoir 16. In this context, as already mentioned, the applicator 24 also forms a cartridge holder 142 storing a cartridge 56 or the cartridge body 56. A dispense knob 52 with a dispense knob support 176 is provided and coupled to an activator sleeve 206. A resetting spring 221 is biased between a collar of the activator sleeve 206 and the main body 140 for resetting the dispense mechanism 61 of the multi-use dispenser 10 after each dispense operation. The dispense mechanism 61 comprises further a piston rod 80 connected via a piston rod puller 222 held by a piston rod puller support 224 to the activator sleeve 206 to transfer a linear motion of the activator sleeve 206 on the piston rod 80. The specific functionality of these various structural features will be described further below.

In addition to the above components, the multi-use dispenser 10 of the present embodiment is provided with a piston rod retraction configuration comprising a piston rod retraction spring 226, a retraction spring support 228 and a piston rod stopper support 230 for holding a stopper for the piston rod 80. Finally, the multi-use dispenser 10 comprises further an indicator drum 128 snap fitted on the rear end of the piston rod 80 and visible through a window (cutout) 180 in the rear body 130.

In the following, the functional configuration of the described multi-use dispenser 10 will be described in detail.

For dispensing material from the reservoir 16 of an applicator 24 connected to the main body 140 of the multi-use dispenser 10, pressure is applied on the dispense knob 52 for pushing the dispense knob 52 inwardly. The dispense knob 52 has an angled shape and is formed of an elastic material, in particular plastic or metal. Furthermore, a first end of the dispense knob 52 is connected slideably and/or rotatably to the main body 140 and the second end of the dispense knob 52 is connected slideably and/or rotatably to the activator sleeve 206. Thus, the applied pressure results in a deformation, in particular in a lengthening, of the dispense knob 52 and, thus, in a linear motion of the activator sleeve 206 in the dispense direction (i.e. to the left) against the force of the resetting spring 221. This movement is transferred by a toothed connection via the piston rod puller 222 and the piston rod puller support 224 to the piston rod 80, pushing with a piston rod pusher 205 on the piston 20 to dispense the material from the reservoir 16 of the applicator 24. During this dispense operation, the piston rod retraction spring 226 is compressed. The stopper inside the body connector 220 engages with the piston rod 80 via the toothed connection blocking a reverse movement of the piston rod 80. As soon as the pressure is released from the dispense knob 52 the resetting spring 221 is released and pushes back the activator sleeve 206, the piston rod puller 222 and the piston rod puller support 224. During this movement, the piston rod puller 222 disengages from the current tooth on the piston rod 80 and engages with the subsequent tooth/teeth on the piston rod 80. This movement of the activator sleeve 206 caused by the load of the resetting spring 221 charged during the previous dispensing process ensures that the dispense knob 52 can return into its original position. Then, the dispense knob 52 can be pushed in again for dispensing a further dose of material from the applicator 24. The position of the indicator drum 128 along the window (cutout) 180 in the rear body 130 changing together with the position of the piston rod 80 indicates the amount of remaining material within the applicator 24.

Once the reservoir 16 of the applicator 24 is empty, the piston rod 80 is at the front-end position of the reservoir 16 and locked/engaged by the body connector 220 via the toothed connection and the stopper blocking the spring back. The body connector 220 and the rear body 130 are radially fixed via a snap lock configured to be released by turning the rear body 130 in anti-clockwise direction with respect to the main body 140 until the next snap lock is engaged. The rear body 130, the indicator drum 128 and the piston rod 80 are radially connected and turn together. During the anti-clockwise turning the connections between the body connector 220 and the piston rod puller 222 with the piston rod 80 are released and the piston rod 80 is retracted to is original position by the force of the piston rod retraction spring 226. When the piston rod 80 has reached its original position, the threaded connection between the applicator 24 and the main body 140 can be released and the applicator 24 can be replaced by a new one. Thus, a configuration allowing the dispensing of multiple doses of material from various applicators 24 with the multi-use dispenser 10 is provided. Merely the applicator 24 has to be replaced from time to time.

Finally, it is pointed out that the above described exemplary embodiments are just provided for the sake of illustration and not for the sake of delimitation. The scope of protection of the present document is only defined by the accompanied set of claims and covers various modifications not described exemplary in this document.

It should be noted that the terms distal and proximal used in the foregoing relate to the positions of use of the applicator 24, i.e. a proximal direction or movement means a direction towards, e.g. the mouth of a patient (not shown) on use of the applicator 24 and a distal direction or movement refers to a movement away from the patient.

### List of reference numerals:

- 10: dispenser
- 12: housing
- 14: nozzle
- 16: reservoir
- 18: material driving assembly
- 20: plunger
- 22: cannula
- 24: applicator
- 25: brush
- 26: outlet
- 28: first connection means
- 30: second connection means
- 32: hub
- 34: proximal end of 12
- 35: distal end of 12
- 36: driver
- 38: pump
- 40: valve
- 42: sensor assembly
- 44: sensor
- 46: control unit
- 48: power supply
- 50: activator
- 52: button
- 54: lever
- 56: cartridge
- 58: chamber
- 60: cover
- 61: dispense mechanism
- 62: lid
- 64: base
- 66: foot
- 68: passage
- 70: sensor
- 72: filling level indicator
- 74: window
- 76: drip pan
- 80: rod
- 82: ratchet cage
- 84: ratchet cylinder
- 86: cylinder
- 88: anchor
- 90: housing
- 92: inner thread of 82
- 94: outer thread of 80
- 96: teeth
- 98: end of 84
- 100: end of 82
- 102: recess
- 104: passage
- 106: end
- 108: outer surface
- 110: finger
- 112: channel
- 114: end
- 116: cone
- 118: end
- 120: cam
- 122: abutment
- 124: resetting mechanism
- 126: cage spring
- 128: indicator drum
- 130: rear body
- 132: inner cylinder
- 134: rotary member
- 136: rotary slide spring
- 138: rotary slide
- 139: sleeve body
- 140: main body
- 142: cartridge holder
- 144: cartridge
- 146: cannula attachment
- 148: coupling between 130 and 82
- 150: recess
- 152: projection
- 153: button-cover
- 154: clamping mechanism
- 156: upper cage element
- 158: lower cage element
- 160: a fixed cage element
- 162: spring
- 164: rotatable cage element
- 166: lever
- 168: guide cam
- 170: guide slot
- 172: abutment surface
- 174: elongate slot
- 176: push button support
- 178: piston guide
- 180: window
- 182: cantilever beam at 139
- 183: nib at 182
- 184: saw tooth cam at 132
- 186: inclined surface
- 188: tooth
- 190: rib
- 192: trench
- 194: washer
- 196: shoulder
- 198: outer wall of 132
- 200: locking element
- 202: circular saw tooth cam at 140
- 204: basis of 132
- 205: piston pusher
- 206: activator sleeve
- 208: activation spring member
- 210: brake element
- 212: toothed configuration
- 214: resetting spring
- 216: dispense body
- 216a: dispense opening
- 217: distribution means
- 218: plug, cap
- 220: body connector
- 221: resetting spring
- 222: piston rod puller
- 224: piston rod puller support
- 226: piston rod retraction spring
- 228: retraction spring support
- 230: piston rod stopper support
- A: longitudinal axis
- M: material
- R: radial direction

## Claims

1. A multi-use dispenser (10) for dispensing a material (M), in particular 1K materials (M), such as 1K dental materials (M), the multi-use dispenser (10) comprising:
a main body (140) forming a part of a housing (12) extending in a longitudinal direction defining a longitudinal axis (A), and
a dispense mechanism (61) provided at least partly within the main body (140), wherein the dispense mechanism (61) comprises a piston rod (80) axially movable in direction of the longitudinal axis (A) with respect to the main body (140),
wherein the main body (140) comprises at its proximal end (34) connection means (30) configured to couple an applicator (24) or hub (32) to the multi-use dispenser (10) in a releasable manner such that a movement of the piston rod (80) towards the proximal end (34) of the main body (140) results in a dispense operation, in particular of dispensing the material (M) out of a reservoir (16) storing the material (M), via the applicator (24) or hub (32),
wherein the dispense mechanism (61) comprises a dispense activator (50) configured to move the piston rod (80) a specific predefined distance towards the proximal end (34) of the main body (140) upon activation of the dispense activator (50),
**characterized in that**
the dispense activator (50) is configured to be operated in a direction perpendicular to the axial dispense direction of the piston rod (80), wherein the dispense activator (50) is coupled operatively to the piston rod (80) via an activation spring member (208) fixed to the dispense activator (50) and in engagement with the piston rod (80).

2. The dispenser (10) according to claim 1, further comprising a slide (138) translationally moveable in direction of the longitudinal axis (A) and an inner cylinder (132) rotatable about the longitudinal axis (A), wherein a translational movement of the slide (138) causes a rotation of the inner cylinder (132).

3. The dispenser (10) according to claim 2, wherein the slide (138) comprises at least one axially extending cantilever beam (182) which upon axial movement of the slide (138), in particular in direction towards a distal end (35) opposite to the proximal end (34) of the housing (12), is engageable with a saw tooth cam (184) formed on the inner cylinder (132), in particular thereby turning the inner cylinder (132).

4. The dispenser (10) according to claim 3, wherein the at least one cantilever beam (182) comprises, in particular at its free end, a radially inwardly projecting nib (183) which upon the axial movement of the slide (138) interacts with an inclined surface (186) of a tooth (188) of the saw tooth cam (184), in particular thereby turning the inner cylinder (132); and/or wherein the slide (138) comprises a sleeve body (139), in particular a cylindrical sleeve body (139), and the at least one cantilever beam (182) axially extends from the sleeve body (39).

5. The dispenser (10) according to one of the claims 2 to 4, wherein a slide spring (136) is axially arranged between the slide (138) and the inner cylinder (132), in particular the slide spring (136) biasing the slide (138) and the inner cylinder (132) apart upon release of the dispense activator (50).

6. The dispenser (10) according to the claims 3 and 5, wherein the slide spring (136) is radially arranged between the at least one cantilever beam (182) and an outer wall (198) of the inner cylinder (132) stepped radially inwardly with regard to the saw tooth cam (184).

7. The dispenser (10) according to any one of claims 2 to 6, further comprising at least one spring elastically deflectable locking element (200) radially protruding from the inner cylinder (132) and interacting with a circular saw tooth cam (202) provided at an inner circumference of the man body (140).

8. The dispenser (10) according to any one of claims 1 to 7, wherein the dispense mechanism (61) comprises a resetting spring (214, 136) biasing the dispense activator (50) from its operated position into its non-operated position.

9. The dispenser (10) according to claim 1, wherein the dispense mechanism (61) comprises a rear body (130) or a moulded element axially movable together with the piston rod (80) along the main body (140) and configured to support the piston rod (80) in its orientation with respect to the main body (140).

10. The dispenser (10) according to claim 1 or claim 9, wherein the dispense activator (50) comprises a brake element (210) contacting the piston rod (80) in a non-operated position of the dispense activator (50) to lock an axial movement of the piston rod (80).

11. The dispenser (10) according to claim 1 or one of the claims 9 or 10,
wherein the piston rod (80) comprises a toothed configuration (212) that is engaged by a clicker member resulting in a haptic and/or acoustic feedback during a proximal movement of the piston rod (80).

12. The dispenser (10) according to claim 1 or one of the claims 9 to 11,
wherein the dispense mechanism (61) comprises a piston rod retraction configuration allowing the retraction of the piston rod (80) after a dispense operation with a first applicator (24) or first hub (32) for replacing the first applicator (24) or first hub (32) with a second applicator (24) or second hub (32) for a further dispense operation with the second applicator (24) or second hub (32), in particular
wherein the piston rod retraction configuration is configured such that the piston rod (80) can be turned by 90° about its longitudinal axis, into an orientation in which the piston rod (80) can be retracted, wherein in particular the piston rod retraction configuration comprises a smooth circumferential section of the piston rod (80), or
wherein the piston rod retraction configuration is configured such that the piston rod (80) can be retracted by a screwing movement of the piston rod (80), wherein in particular the piston rod retraction mechanism is formed by a thread about the circumference of the piston rod (80); and/or
wherein the piston rod retraction configuration comprises a piston rod retraction spring (226) and a retraction spring support (228) for the retraction operation of the piston rod (80), wherein the piston rod retraction spring (226) is configured to be loaded during the dispensing operation and to be relaxed during and for the retraction operation of the piston rod (80).

13. An application set comprising a dispenser (10) according to any one of the claims 1 to 12 and at least one, in particular at least two, applicator(s) (24) or hub(s) (32) for such a multi-use dispenser (10), in particular for dental applications,
wherein each applicator (24) or hub (32) comprises a cartridge body (56) defining a reservoir (16) filled with an in particular dentistry applicable substance,
wherein each cartridge body (56) is connected to a dispense body (216) with a dispense opening (216a) through which the substance from the corresponding reservoir (16) can be dispensed,
wherein a piston (20) is provided movably along the corresponding reservoir (16) within each cartridge body (56) and is configured to dispense the substance from the corresponding reservoir (16) upon movement in a proximal direction towards the dispense body (216),
wherein each applicator (24) or hub (32) comprises, in particular keyed, connection means (28), in particular in the form of a Luer-Lock or bayonet connection means, configured to couple the respective applicator (24) or hub (32) to the connection means (30) of the multi-use dispenser (10) in a releasable manner, such that the piston (20) is movable in the proximal direction by a dispense operation of the multi-use dispenser (10).

14. The application set according to claim 13,
wherein the dispense body (216) of each applicator (24) or hub (32) comprises a distribution means (217) at, in particular around, the dispense opening (216a);
wherein in particular the distribution means (217) comprises a brush configuration (25) at, in particular around, the dispense opening (216a),
wherein preferably the brush configuration (25) is formed as a micro toothbrush; or
wherein the distribution means (217) comprises a foam configuration (23) at, in particular around, the dispense opening (216a); and/or
wherein the cartridge body (56) and the dispense body (216), and in particular also the distribution means (217), of each applicator (24) or hub (32) are formed from a single material and/or
wherein the cartridge body (56) and the dispense body (216), and in particular also the distribution means (217), of each applicator (24) or hub (32) are formed as single one-piece member; and/or
wherein each applicator (24) or hub (32) comprises a plug or cap (218) configured to be coupled releasably to the dispense body (216) to seal the dispense opening (216a).

## Patentansprüche

1. Mehrzweckspender (10) zum Ausgeben eines Materials (M), insbesondere von 1K-Materialien (M), wie etwa 1K-Dentalmaterialien (M), wobei der Mehrzweckspender (10) Folgendes umfasst:
einen Hauptkörper (140), der einen Teil eines Gehäuses (12) bildet, das sich in einer Längsrichtung erstreckt, die eine Längsachse (A) definiert, und
einen Ausgabemechanismus (61), der mindestens teilweise innerhalb des Hauptkörpers (140) bereitgestellt ist, wobei der Ausgabemechanismus (61) eine Kolbenstange (80) umfasst, die in Richtung der Längsachse (A) in Bezug auf den Hauptkörper (140) axial beweglich ist,
wobei der Hauptkörper (140) an seinem proximalen Ende (34) Verbindungsmittel (30) umfasst, die ausgebildet sind, um einen Applikator (24) oder eine Nabe (32) mit dem Mehrzweckspender (10) auf eine lösbare Weise zu koppeln, sodass eine Bewegung der Kolbenstange (80) in Richtung des proximalen Endes (34) des Hauptkörpers (140) zu einem Ausgabevorgang führt, insbesondere zum Ausgeben des Materials (M) aus einem Reservoir (16), das das Material (M) speichert, über den Applikator (24) oder die Nabe (32),
wobei der Ausgabemechanismus (61) einen Ausgabeaktivator (50) umfasst, der ausgebildet ist, um die Kolbenstange (80) bei Aktivierung des Ausgabeaktivators (50) um eine spezifische vordefinierte Strecke in Richtung des proximalen Endes (34) des Hauptkörpers (140) zu bewegen,
**dadurch gekennzeichnet, dass**
der Ausgabeaktivator (50) ausgebildet ist, um in einer Richtung senkrecht zu der axialen Ausgaberichtung der Kolbenstange (80) betrieben zu werden, wobei der Ausgabeaktivator (50) über ein Aktivierungsfederelement (208), das an dem Ausgabeaktivator (50) befestigt ist und mit der Kolbenstange (80) in Eingriff steht, betriebsfähig mit der Kolbenstange (80) gekoppelt ist.

2. Spender (10) nach Anspruch 1, ferner umfassend einen Schieber (138), der in Richtung der Längsachse (A) translatorisch beweglich ist, und einen Innenzylinder (132), der um die Längsachse (A) drehbar ist, wobei eine translatorische Bewegung des Schiebers (138) eine Drehung des Innenzylinders (132) bewirkt.

3. Spender (10) nach Anspruch 2, wobei der Schieber (138) mindestens einen sich axial erstreckenden Auslegerbalken (182) umfasst, der bei axialer Bewegung des Schiebers (138), insbesondere in Richtung zu einem distalen Ende (35) gegenüber dem proximalen Ende (34) des Gehäuses (12), mit einer Sägezahnnocke (184) in Eingriff bringbar ist, die an dem Innenzylinder (132) gebildet ist, wobei sich insbesondere dadurch der Innenzylinder (132) dreht.

4. Spender (10) nach Anspruch 3, wobei der mindestens eine Auslegerbalken (182), insbesondere an seinem freien Ende, eine radial nach innen vorstehende Nase (183) umfasst, die bei der axialen Bewegung des Schiebers (138) mit einer geneigten Fläche (186) eines Zahns (188) der Sägezahnnocke (184) zusammenwirkt, wobei sich insbesondere dadurch der Innenzylinder (132) dreht; und/oder
wobei der Schieber (138) einen Hülsenkörper (139), insbesondere einen zylindrischen Hülsenkörper (139), umfasst und sich der mindestens eine Auslegerbalken (182) axial von dem Hülsenkörper (39) erstreckt.

5. Spender (10) nach einem der Ansprüche 2 bis 4, wobei eine Schieberfeder (136) axial zwischen dem Schieber (138) und dem Innenzylinder (132) angeordnet ist, wobei insbesondere die Schieberfeder (136) den Schieber (138) und den Innenzylinder (132) bei Freigabe des Ausgabeaktivators (50) auseinander vorspannt.

6. Spender (10) nach den Ansprüchen 3 und 5, wobei die Schieberfeder (136) radial zwischen dem mindestens einen Auslegerbalken (182) und einer Außenwand (198) des Innenzylinders (132) angeordnet ist, die in Bezug auf die Sägezahnnocke (184) radial nach innen abgestuft ist.

7. Spender (10) nach einem der Ansprüche 2 bis 6, ferner umfassend mindestens ein federelastisch ablenkbares Verriegelungselement (200), das radial von dem Innenzylinder (132) vorsteht und mit einer kreisförmigen Sägezahnnocke (202) zusammenwirkt, die an einem Innenumfang des Hauptkörpers (140) vorgesehen ist.

8. Spender (10) nach einem der Ansprüche 1 bis 7, wobei der Ausgabemechanismus (61) eine Rückstellfeder (214, 136) umfasst, die den Ausgabeaktivator (50) aus seiner Betriebsposition in seine Nicht-Betriebsposition vorspannt.

9. Spender (10) nach Anspruch 1, wobei der Ausgabemechanismus (61) einen hinteren Körper (130) oder ein geformtes Element umfasst, das zusammen mit der Kolbenstange (80) entlang des Hauptkörpers (140) axial beweglich ist und konfiguriert ist, um die Kolbenstange (80) in ihrer Ausrichtung in Bezug auf den Hauptkörper (140) zu stützen.

10. Spender (10) nach Anspruch 1 oder Anspruch 9, wobei der Ausgabeaktivator (50) ein Bremselement (210) umfasst, das die Kolbenstange (80) in einer Nicht-Betriebsposition des Ausgabeaktivators (50) berührt, um eine axiale Bewegung der Kolbenstange (80) zu verriegeln.

11. Spender (10) nach Anspruch 1 oder einem der Ansprüche 9 oder 10,
wobei die Kolbenstange (80) eine gezahnte Konfiguration (212) umfasst, die von einem Klickerelement in Eingriff genommen wird, was zu einer haptischen und/oder akustischen Rückmeldung während einer proximalen Bewegung der Kolbenstange (80) führt.

12. Spender (10) nach Anspruch 1 oder einem der Ansprüche 9 bis 11,
wobei der Ausgabemechanismus (61) eine Kolbenstangenrückzugskonfiguration umfasst, die das Zurückziehen der Kolbenstange (80) nach einem Ausgabevorgang mit einem ersten Applikator (24) oder einer ersten Nabe (32) zum Ersetzen des ersten Applikators (24) oder der ersten Nabe (32) durch einen zweiten Applikator (24) oder eine zweite Nabe (32) für einen weiteren Ausgabevorgang mit dem zweiten Applikator (24) oder der zweiten Nabe (32) ermöglicht, wobei insbesondere
die Kolbenstangenrückzugskonfiguration derart ausgebildet ist, dass die Kolbenstange (80) um 90° um ihre Längsachse in eine Ausrichtung gedreht werden kann, in der die Kolbenstange (80) zurückgezogen werden kann, wobei insbesondere die Kolbenstangenrückzugskonfiguration einen glatten Umfangsabschnitt der Kolbenstange (80) umfasst, oder
wobei die Kolbenstangenrückzugskonfiguration derart ausgebildet ist, dass die Kolbenstange (80) durch eine Schraubbewegung der Kolbenstange (80) zurückgezogen werden kann, wobei insbesondere der Kolbenstangenrückzugsmechanismus durch ein Gewinde um den Umfang der Kolbenstange (80) gebildet ist; und/oder
wobei die Kolbenstangenrückzugskonfiguration eine Kolbenstangenrückzugsfeder (226) und eine Rückzugsfederstütze (228) für den Rückzugsvorgang der Kolbenstange (80) umfasst,
wobei die Kolbenstangenrückzugsfeder (226) ausgebildet ist, um während des Ausgabevorgangs belastet zu werden und um während und für den Rückzugsvorgang der Kolbenstange (80) entspannt zu werden.

13. Anwendungssatz, umfassend einen Spender (10) nach einem der Ansprüche 1 bis 12 und mindestens einen, insbesondere mindestens zwei, Applikator(en) (24) oder Nabe(n) (32) für einen solchen Mehrzweckspender (10), insbesondere für Dentalanwendungen,
wobei jeder Applikator (24) oder jede Nabe (32) einen Kartuschenkörper (56) umfasst, der ein Reservoir (16) definiert, das mit einer insbesondere zahnmedizinisch anwendbaren Substanz gefüllt ist,
wobei jeder Kartuschenkörper (56) mit einem Ausgabekörper (216) mit einer Ausgabeöffnung (216a) verbunden ist, durch die die Substanz aus dem entsprechenden Reservoir (16) ausgegeben werden kann,
wobei ein Kolben (20) entlang des entsprechenden Reservoirs (16) innerhalb jedes Kartuschenkörpers (56) beweglich bereitgestellt ist und ausgebildet ist, um die Substanz aus dem entsprechenden Reservoir (16) bei Bewegung in einer proximalen Richtung in Richtung des Ausgabekörpers (216) auszugeben,
wobei jeder Applikator (24) oder jede Nabe (32), insbesondere verkeilte, Verbindungsmittel (28), insbesondere in der Form eines Luer-Lock-oder Bajonettverbindungsmittels, umfasst, die ausgebildet sind, um den jeweiligen Applikator (24) oder die jeweilige Nabe (32) mit den Verbindungsmitteln (30) des Mehrzweckspenders (10) auf eine lösbare Weise zu koppeln, sodass der Kolben (20) durch einen Ausgabevorgang des Mehrzweckspenders (10) in der proximalen Richtung beweglich ist.

14. Anwendungssatz nach Anspruch 13,
wobei der Ausgabekörper (216) jedes Applikators (24) oder jeder Nabe (32) ein Verteilungsmittel (217) an, insbesondere um, die Ausgabeöffnung (216a) umfasst;
wobei insbesondere das Verteilungsmittel (217) eine Bürstenkonfiguration (25) an, insbesondere um, die Ausgabeöffnung (216a) umfasst,
wobei vorzugsweise die Bürstenkonfiguration (25) als eine Mikrozahnbürste ausgebildet ist; oder
wobei das Verteilungsmittel (217) eine Schaumkonfiguration (23) an, insbesondere um, die Ausgabeöffnung (216a) umfasst; und/oder
wobei der Kartuschenkörper (56) und der Ausgabekörper (216) und insbesondere auch das Verteilungsmittel (217) jedes Applikators (24) oder jeder Nabe (32) aus einem einzigen Material ausgebildet sind und/oder
wobei der Kartuschenkörper (56) und der Ausgabekörper (216) und insbesondere auch das Verteilungsmittel (217) jedes Applikators (24) oder jeder Nabe (32) als ein einziges einstückiges Element ausgebildet sind; und/oder
wobei jeder Applikator (24) oder jede Nabe (32) einen Stopfen oder eine Kappe (218) umfasst, der/die ausgebildet ist, um lösbar mit dem Ausgabekörper (216) gekoppelt zu werden, um die Ausgabeöffnung (216a) abzudichten.

## Revendications

1. Distributeur à usages multiples (10) pour distribuer un matériau (M), en particulier des matériaux 1K (M), tels que des matériaux dentaires 1K (M), le distributeur à usages multiples (10) comprenant :
un corps principal (140) formant une partie d'un logement (12) s'étendant dans une direction longitudinale définissant un axe longitudinal (A), et
un mécanisme de distribution (61) prévu au moins partiellement à l'intérieur du corps principal (140), dans lequel le mécanisme de distribution (61) comprend une tige de piston (80) mobile axialement dans la direction de l'axe longitudinal (A) par rapport au corps principal (140),
dans lequel le corps principal (140) comprend au niveau de son extrémité proximale (34) des moyens de raccordement (30) configurés pour coupler un applicateur (24) ou un moyeu (32) au distributeur à usages multiples (10) d'une manière libérable de sorte qu'un mouvement de la tige de piston (80) vers l'extrémité proximale (34) du corps principal (140) résulte en une opération de distribution, en particulier de distribution du matériau (M) hors d'un réservoir (16) stockant le matériau (M), via l'applicateur (24) ou le moyeu (32),
dans lequel le mécanisme de distribution (61) comprend un activateur de distribution (50) configuré pour déplacer la tige de piston (80) sur une distance prédéfinie spécifique vers l'extrémité proximale (34) du corps principal (140) lors de l'activation de l'activateur de distribution (50),
**caractérisé en ce que**
l'activateur de distribution (50) est configuré pour être actionné dans une direction perpendiculaire à la direction de distribution axiale de la tige de piston (80), dans lequel l'activateur de distribution (50) est couplé de manière fonctionnelle à la tige de piston (80) via un élément de ressort d'activation (208) fixé à l'activateur de distribution (50) et en prise avec la tige de piston (80).

2. Distributeur (10) selon la revendication 1, comprenant en outre un coulisseau (138) mobile en translation dans la direction de l'axe longitudinal (A) et un cylindre interne (132) pouvant tourner autour de l'axe longitudinal (A), dans lequel un mouvement de translation du coulisseau (138) provoque une rotation du cylindre interne (132).

3. Distributeur (10) selon la revendication 2, dans lequel le coulisseau (138) comprend au moins une poutre en porte-à-faux s'étendant axialement (182) qui lors du mouvement axial du coulisseau (138), en particulier dans la direction vers une extrémité distale (35) opposée à l'extrémité proximale (34) du logement (12), peut venir en prise avec une came en dents de scie (184) formée sur le cylindre interne (132), en particulier faisant ainsi tourner le cylindre interne (132).

4. Distributeur (10) selon la revendication 3, dans lequel l'au moins une poutre en porte-à-faux (182) comprend, en particulier au niveau de son extrémité libre, une saillie faisant saillie radialement vers l'intérieur (183) qui lors du mouvement axial du coulisseau (138) interagit avec une surface inclinée (186) d'une dent (188) de la came en dents de scie (184), en particulier faisant ainsi tourner le cylindre interne (132) ; et/ou
dans lequel le coulisseau (138) comprend un corps de manchon (139), en particulier un corps de manchon cylindrique (139), et l'au moins une poutre en porte-à-faux (182) s'étend axialement à partir du corps de manchon (39).

5. Distributeur (10) selon l'une des revendications 2 à 4, dans lequel un ressort de coulisseau (136) est agencé axialement entre le coulisseau (138) et le cylindre interne (132), en particulier le ressort de coulisseau (136) sollicitant le coulisseau (138) et le cylindre interne (132) à l'écart lors de la libération de l'activateur de distribution (50).

6. Distributeur (10) selon les revendications 3 et 5, dans lequel le ressort de coulisseau (136) est agencé radialement entre l'au moins une poutre en porte-à-faux (182) et une paroi externe (198) du cylindre interne (132) étagée radialement vers l'intérieur par rapport à la came en dents de scie (184).

7. Distributeur (10) selon l'une quelconque des revendications 2 à 6, comprenant en outre au moins un élément de verrouillage pouvant être dévié élastiquement par ressort (200) faisant saillie radialement du cylindre interne (132) et interagissant avec une came en dents de scie circulaire (202) prévue au niveau d'une circonférence interne du corps principal (140).

8. Distributeur (10) selon l'une quelconque des revendications 1 à 7, dans lequel le mécanisme de distribution (61) comprend un ressort de réinitialisa-tion (214, 136) sollicitant l'activateur de distribution (50) de sa position actionnée à sa position non actionnée.

9. Distributeur (10) selon la revendication 1, dans lequel le mécanisme de distribution (61) comprend un corps arrière (130) ou un élément moulé mobile axialement conjointement avec la tige de piston (80) le long du corps principal (140) et configuré pour supporter la tige de piston (80) dans son orientation par rapport au corps principal (140).

10. Distributeur (10) selon la revendication 1 ou la revendication 9, dans lequel l'activateur de distribution (50) comprend un élément de frein (210) venant en contact avec la tige de piston (80) dans une position non actionnée de l'activateur de distribution (50) pour verrouiller un mouvement axial de la tige de piston (80).

11. Distributeur (10) selon la revendication 1 ou l'une des revendications 9 ou 10,
dans lequel la tige de piston (80) comprend une configuration dentée (212) qui est mise en prise par un élément de cliquet résultant en une rétroaction haptique et/ou acoustique pendant un mouvement proximal de la tige de piston (80).

12. Distributeur (10) selon la revendication 1 ou l'une des revendications 9 à 11,
dans lequel le mécanisme de distribution (61) comprend une configuration de rétraction de tige de piston permettant la rétraction de la tige de piston (80) après une opération de distribution avec un premier applicateur (24) ou premier moyeu (32) pour remplacer le premier applicateur (24) ou premier moyeu (32) par un second applicateur (24) ou second moyeu (32) pour une autre opération de distribution avec le second applicateur (24) ou second moyeu (32), en particulier
dans lequel la configuration de rétraction de tige de piston est configurée de sorte que la tige de piston (80) peut être tournée de 90° autour de son axe longitudinal, dans une orientation dans laquelle la tige de piston (80) peut être rétractée, dans lequel en particulier la configuration de rétraction de tige de piston comprend une section circonférentielle lisse de la tige de piston (80), ou
dans lequel la configuration de rétraction de tige de piston est configurée de sorte que la tige de piston (80) peut être rétractée par un mouvement de vissage de la tige de piston (80), dans lequel en particulier le mécanisme de rétraction de tige de piston est formé par un filetage autour de la circonférence de la tige de piston (80) ; et/ou
dans lequel la configuration de rétraction de tige de piston comprend un ressort de rétraction de tige de piston (226) et un support de ressort de rétraction (228) pour l'opération de rétraction de la tige de piston (80),
dans lequel le ressort de rétraction de tige de piston (226) est configuré pour être chargé pendant l'opération de distribution et pour être détendu pendant et pour l'opération de rétraction de la tige de piston (80).

13. Ensemble d'applications comprenant un distributeur (10) selon l'une quelconque des revendications 1 à 12 et au moins un, en particulier au moins deux, applicateur(s) (24) ou moyeu(s) (32) pour un tel distributeur à usages multiples (10), en particulier pour des applications dentaires,
dans lequel chaque applicateur (24) ou moyeu (32) comprend un corps de cartouche (56) définissant un réservoir (16) rempli d'une substance applicable en particulier en dentisterie,
dans lequel chaque corps de cartouche (56) est raccordé à un corps de distribution (216) avec une ouverture de distribution (216a) à travers laquelle la substance provenant du réservoir correspondant (16) peut être distribuée,
dans lequel un piston (20) est prévu de manière mobile le long du réservoir correspondant (16) à l'intérieur de chaque corps de cartouche (56) et est configuré pour distribuer la substance à partir du réservoir correspondant (16) lors d'un mouvement dans une direction proximale vers le corps de distribution (216),
dans lequel chaque applicateur (24) ou moyeu (32) comprend, en particulier claveté, des moyens de raccordement (28), en particulier sous la forme d'un moyen de raccordement Luer-Lock ou à baïonnette, configuré pour coupler l'applicateur (24) ou moyeu (32) respectif aux moyens de raccordement (30) du distributeur à usages multiples (10) d'une manière libérable, de sorte que le piston (20) est mobile dans la direction proximale par une opération de distribution du distributeur à usages multiples (10).

14. Ensemble d'applications selon la revendication 13,
dans lequel le corps de distribution (216) de chaque applicateur (24) ou moyeu (32) comprend un moyen de distribution (217) au niveau, en particulier autour, de l'ouverture de distribution (216a) ;
dans lequel en particulier le moyen de distribution (217) comprend une configuration de brosse (25) au niveau, en particulier autour, de l'ouverture de distribution (216a),
dans lequel de préférence la configuration de brosse (25) est formée comme une micro-brosse à dents ; ou
dans lequel le moyen de distribution (217) comprend une configuration de mousse (23) au niveau, en particulier autour, de l'ouverture de distribution (216a) ; et/ou
dans lequel le corps de cartouche (56) et le corps de distribution (216), et en particulier également le moyen de distribution (217), de chaque applicateur (24) ou moyeu (32) sont formés à partir d'un matériau unique et/ou
dans lequel le corps de cartouche (56) et le corps de distribution (216), et en particulier également le moyen de distribution (217), de chaque applicateur (24) ou moyeu (32) sont formés comme un élément monobloc unique ; et/ou
dans lequel chaque applicateur (24) ou moyeu (32) comprend un bouchon ou capuchon (218) configuré pour être couplé de manière libérable au corps de distribution (216) pour sceller l'ouverture de distribution (216a).
